# EUROPEAN PATENT APPLICATION

(11) **EP 1 132 844 A2**
(43) Date of publication of application: **12.09.2001**
(21) Application number: 01301581.3
(22) Date of filing: 22.02.2001
(51) Int. Cl.: G06F 17/60

(54) **E-commerce system facilitating service networks including broadband communication service networks**

(30) Priority: 02.03.2000 US 186470 P; 09.08.2000 US 634566
(71) Applicant: Telseon IP Services Inc., Mountain View, CA 94043 (US)
(72) Inventor: Seaman, Michael J., Mountain View, CA 94041 (US); Jain, Vipin, Santa Clara, CA 95054 (US); Jaszewski, Gary, Los Gatos, CA 95032 (US); Klessig, Robert W., Los Altos Hills, CA 94024 (US); van Peenen, Peter J., Sacramento, CA 95864 (US); Braginsky, David, Palo Alto, CA 94303 (US)
(74) Representative: Horner, David Richard

(57) **Abstract**

A process and system to facilitate transactions between two parties that require the services of a third, referred to as the service provider, and the mechanisms necessary to realize that process using electronic systems are described. The preferred process and system for provisioning services offered by service provider for a plurality of parties comprises establishing connections and service provider accounts between the service provider and the plurality parties for delivery services among the parties according to parameters of respective service provider accounts. An interface, such as a secure Web page, is provided that is accessible by the parties in the plurality of parties. The interface supports logical definition of services to be provisioned by the service provider and to be associated with parties in the plurality parties, to support logical connection to the particular logically defined services by the associated parties. The interface also supports offers of particular logically defined services by one party to one or more other parties. The logical definitions of particular services are processed to verify that the service provider accounts of the associated parties support the particular logically defined service. After logical connections of one or more parties to the particular logically defined service are established, the process to provision a physical instance of the particular logically defined service is executed. Services provisioned and delivered include, among others, broadband communications in a secure Metropolitan Area Network.

## Description

### BACKGROUND OF THE INVENTION

### Field of the Invention

The present invention relates to commerce among parties that involves the services of a third party for fulfillment, and more particularly to methods and systems for simplifying transactions between the parties and provisioning the third party service. In one particular embodiment, the invention relates to such commerce in which the third party service comprises broadband communication services.

### Description of Related Art

To facilitate transactions between two parties, the services of a third are often required. Examples of such transactions include, among many others, agreements to transport goods between a first and second party involving the use of a shipping service, agreements to purchase electrical power from a power generating company involving the services of an electric power distribution network, and agreements to share information involving the services of a communication network. Before the third party, referred to as the service provider herein, provides services to facilitate the transaction, it may need assurance that the first two parties are agreed on the transaction. This is particularly the case if the service provider, by the nature of the services it provides, has a relationship of trust with one or both of the parties. This relationship may involve financial and legal responsibilities or consequences. While one of the parties may request services from the service provider to facilitate the transaction, there may exist an important trust relationship between the service provider and the second party.

For example, one transaction involves the service provided by an airline (the service provider) in transporting a traveler (the first party) to a foreign country (the second party). The airline's ability to transport travelers is regulated by the destination country and a certain trust in the airline, not to abuse its ability to rapidly transport persons or goods to the country, is required from that country. The regulations imposed typically include some imposed by the immigration authorities of the destination country, requiring that only accredited travelers be landed, and those only at selected ports of entry into the country. In many cases the airline is put to the extra expense of returning the traveler to the original point of departure, if these requirements are not met.

Typically, in transactions between two parties requiring the services of a third, the service provider obtains from the party initiating the transaction documentation attesting to the agreement of the second party. In the airline example this documentation usually comprises a passport identifying the traveler and a visa granted by the destination country, and the traveler has to acquire this documentation well in advance of the proposed trip.

In many transactions the eventual expense to be borne by the second party caused by a request from the first, and the ability of the second party to support the proposed transaction, vary from transaction to transaction. While it is possible for a first party to obtain detailed authorization from the second party prior to making each request of the service provider, this and the subsequent interactions required between the parties, particularly where these are represented by humans who have to undertake approval and qualification tasks, may impose significant delay on initiating and/or completing the proposed transaction. Where the transaction can use electronic means, either as part of its initiation or as a part of fulfilling the transaction, e.g. the delivery of certain data, these approval delays may significantly impact the desire of the parties to engage in the transaction at all. A diminution in the attractiveness of transactions naturally adversely affects the business of the service provider.

Given the general opportunity to expedite transactions and increase the volume of business for service providers or parties that use their services by using the set of mechanisms and facilities e.g., (the Internet, the World Wide Web, Browsers and their associated computer communication protocols), generally referred to as E-Commerce or Electronic Commerce the problem to be solved is to use these mechanisms in a way that simplifies the interaction between the parties and the service provider and involves the minimum number of approvals that may require human intervention for a typical transaction.

A typical solution requires that the two parties potentially engaged in the transaction correspond regarding the specific transaction proposed, prior to notifying the service provider of the specific transaction. The service provider then verifies that this transaction is approved, at least with the second party (where the first party is identified as the party making the request of the service provider).

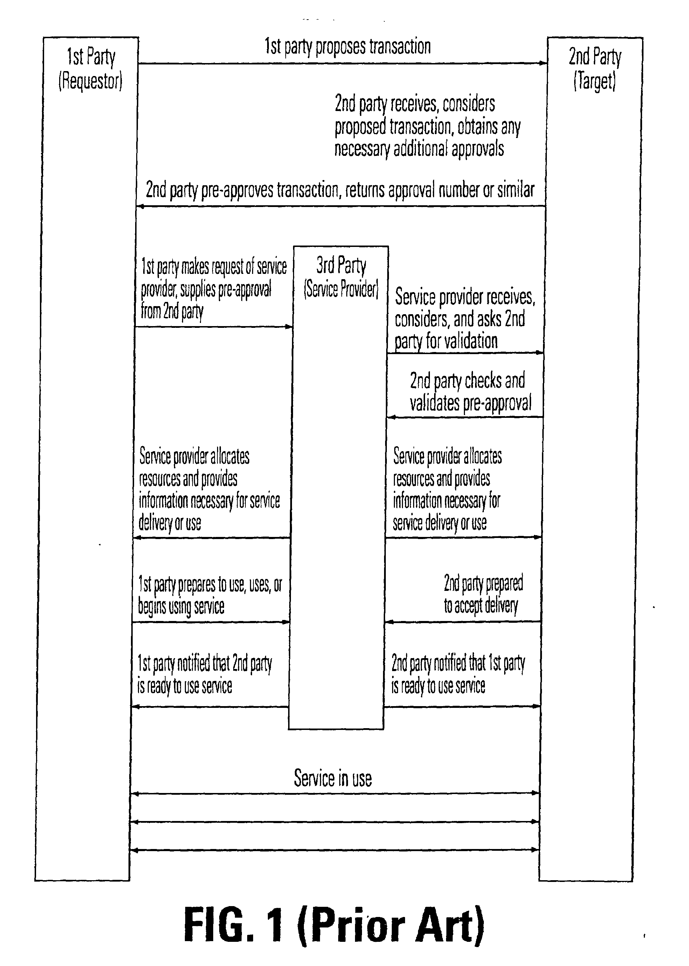

Further interactions typically occur as the service provider delivers or commences delivery of the service to each party, requiring interaction with that party at that time, and as the service provider notifies the other party of service delivery. The exchanges in a prior art commercial setting, among the parties involved are illustrated by Fig. 1.

Problems or disadvantages with these prior approaches include the fact that human interaction is required multiple times. Each human action leads to a delay in completing the intended transaction, since the human operator typically has other tasks to perform. The delay and number of interactions required complicate the problem of representing to the potential user of a delivery service what progress has been made with his or her request. This diminishes the value of the Electronic Commerce approach, which in two party transactions can bring a sense of closure, or successful completion, to each intermediate action required to complete an overall transaction.

Another problem arises when the service provider must understand the approval information, or the format and nature of the approval information, supplied by the second party to the first, in order to validate this approval information with the first party.

One class of service provider which historically has involved significant transaction costs in the setting up of service is communication bandwidth. Businesses that need high speed connectivity today may use DSL, T1, DS3, SONET, or ATM connections provided by public service providers. In addition 'private LAN like services' are available in some areas. These services are characterized by:
- a long time - often many weeks - is taken from order to delivery of increased bandwidth services.
- service is only offered between points agreed some time in advance by the communicating businesses.
- interfaces offered by the service providers are quite different from those used by the customers for their onsite networking connectivity.
- direct electronic support for customers ordering upgraded service, or wishing to monitor service is not available.
- a combination of paper forms and telephone calls is required to order service, with no way of using electronic secure identification to help the customer hand the management of their service to a further party or systems integrator.

The lack of flexibility in managing the service and activating new connections or additional bandwidth typically means that customers have to order more communications bandwidth than they initially desire, with consequent expense, and this means that the bandwidth is not usually immediately available when there is a need to scale the customer's business operations.

An alternative for some customers today is to use more modern technology to construct a private network. This however involves the customers in large up front cost, while not providing the essential capability of rapid connection to a range of service providers.

In the communication bandwidth service field, the association between parties for use of the service present unique problems. Before data is transferred between two interfaces to a data transfer medium, an association has to be made by provisioning a link between those interfaces. If the data transfer medium is very simple, e.g. a copper wire or cable comprising wires, the association may be physical - the cable is plugged into the two interfaces. If the data transfer medium comprises electronic switching or multiplexing such as in a public net-work, in which parts of the physical media that support the data transfer between the interfaces may also support data transfer between other pairs of interfaces, more complex arrangements are required to form the association between the interfaces and to ensure that data to be transferred between them is transferred and not transferred to other interfaces. The arrangements required to form the association are typically known as a 'protocol', that is to say a set of rules for the orderly interchange of information, in electronic or other form, between parties that are responsible for the interfaces and for the transmission media, that result in an agreement as to the use of the media for data transfer between the interfaces. This agreement and the resulting configuration of the interfaces and the media to support data transfer are often referred to as 'connection establishment'.

There are many different protocols for connection establishment in use today. The following basic functionality is typically supported, though their detailed mechanisms differ widely:
- Unambiguous identification of the interfaces between which data is to be transferred.
- Checking that the owners of those interfaces, or at least the software configured to represent the desires of the owners of those interfaces, are agreed that data transfer may take place.
- Establishing parameters for the transfer of data that satisfy the configuration of the interfaces, limitations of the transmission media, and possible constraints on the allocation of resources including financial resources.

The different protocols can be broadly categorized. In one category, known as 'in-band' protocols; protocol messages are formulated as data, and the protocol 'signaling', i.e. the exchange of protocol messages, occurs between the equipment attached to the interfaces, and potentially between the equipment attached to the interfaces and the equipment supporting the data transmission media that will eventually form the path by which data is transferred between the interfaces. In a second category, known as 'out of band' protocols, protocol signaling occurs between the interfaces and a further system, not usually involved in the final data transmission path. This further system then configures equipment in the data transmission path to support the eventual data transfer between the interfaces. In data transfer arrangements that use 'out of band' signaling, the protocol used by the interfaces is usually very simple, so much so that the phrase 'out of band connection establishment' is often used where the equipment attached to the interfaces does not operate any protocol at all. In such cases and where the data transfer medium comprises electronic switching equipment, the 'connection establishment protocol' typically begins with a human conversation, is continued by the exchange of paper forms or agreements, and completes by a human operator employed by the organization administering the electronic switching system who configures that system through some electronic user interface.

In modern communications systems data transfer protocols are 'layered', that is to say that a given protocol may use a 'lower layer' protocol to perform part of the connection establishment ― connection to the first system in the data transfer path for example. While the 'higher layer' protocol may use 'in band connection establishment' the lower one may not, and in its most common configuration the communication system may have a fixed relationship between two such protocols. While a 'lower layer' protocol may have been originally designed to be trivial, e.g. accomplished by physical wiring, or intentionally performed by an operator, and hence did not include arrangements for connection to remote systems or without a central operator, there are often new business needs for the interface supported by that protocol to remain the same while the geographic extent of the connection is considerably enhanced, or the delay in providing the connection much reduced by removing the need for a central operator who has to perform the functions described above, i.e. unambiguous identification of interfaces, checking the agreement of the owners of those interfaces or of the attached equipment, and meeting configuration constraints.

The problem then is to arrange for the rapid establishment of connections that use data interfaces that do not support a suitable 'in band' connection setup protocol. In the past solutions have been provided in three ways:
a) by the development of new 'lower layer' protocols (e.g., ATM) that naturally contain the signaling elements required for connection establishment over the desired geographic extent, and that contain information on the parameters of the connection to be resolved
b) by the development of mechanisms in the data transfer system, and not visible at the interfaces, that extract information from a 'higher layer' protocol to generate the desired information for the 'lower layer' protocol to perform its enhanced role in the connection establishment
c) by the development of more efficient forms, including electronic forms, that capture the information that a human operator requires to configure the systems supporting the data transfer.

In addition there are frequent public references to 'point and click' provisioning as a desirable goal. However applicant is not aware of proven products supporting this concept.

Use of a new protocol as in past solution (a) naturally requires its deployment in the systems attached to the interfaces. This may be logistically difficult, and may be disruptive, or be perceived to be disruptive to the continued successful functioning of that equipment. It may present the user of the equipment with an unfamiliar and hence undesirable configuration and management task.

Automatic extraction of information from a higher layer protocol as in past solution (b) may be difficult or impossible for a number of reasons. Extracting information not specifically intended for some purpose may involve making assumptions that are unwarranted, or at least particular to the individual source of the information making the task of configuring and controlling the process of information extraction unduly difficult. A lack of guaranteed integrity of the extracted information may raise questions of security with the owners of the equipment attached to the interfaces. Also, the information needed may be encrypted in some cases, making extraction impractical.

The development of more efficient forms as in past solution (c) to capture identification information, agreements, and configuration parameters still requires a number of 'back and forth' discussions between humans who may not be immediately available to attend to this specific task, thus slowing the establishment of the data connection.

Having a timely and responsive provisioning process is one of the big challenges in providing useful Metropolitan Area Network Services.

### SUMMARY OF THE INVENTION

Particular and preferred aspects of the present invention are set out in the accompanying independent and dependent claims. Features of the dependent claims may be combined with features of the independent claims as appropriate, and in combinations other than those explicitly set out in the claims.

This invention comprises a novel process and system, for transactions between two parties that require the services of a third, referred to as the service provider, and the mechanisms necessary to realize that process using electronic systems. In the preferred embodiment the service provider provides data transmission services to each of the two parties, or more parties, and each of these parties requires (for reasons of security) that data transmission services only be provided to specifically approved other parties at specifically approved locations through specific and separate interfaces.

The nature of the invention is such that it facilitates reduction in the number of times or sessions during which human operators have to interact with the electronic commerce systems from the number that could be required if the procedures used in conventional non-integrated systems based on exchanging paper documents or telephone calls were to be computerized directly. In preferred embodiments, the two parties concerned each have access to an up-to-date representation or model of their potential and actual use of the service provided by the service provider to conduct transactions with other parties. That is to say each party sees its own potential and actual uses of the service.

Embodiments of the invention also provide a simple explanation to each user (each party involved or potentially involved in the transaction) of the financial and other responsibilities incurred by their use of elements of the model. The model preferably comprises a first type of elements that may be created (understanding that such creation is a logical construct sustained by an electronic representation) by a user to represent a transaction, and related elements that represent participation in the transaction. The user that creates an element of the first type may create elements of the second type in relation to it, and make those available to the specific other user or users. Each of those users may inspect the elements of the second type made available to them, and by placing them in relation to elements of a third type, an action that only they can perform, in order to signify their willingness to participate in the proposed transaction (at least to the extent relevant to the service provider). The choice of a particular instance of this third type of element may convey parameters as to the user of the service provided and their participation in the transaction.

Connection setup between two service interfaces is made using an internet browser based interface, in one advantageous embodiment of the invention.

In one embodiment of the invention, a method for provisioning services offered by a service provider for a plurality of parties is provided. The method includes providing an interface by which the first party identifies attributes of the particular service to be shared with a second party and to be provisioned by the service provider. Another step in the method includes offering participation in the particular service to the second party via an interface by which the second party may signal acceptance of the particular service. If acceptance by the second party of the particular service is signaled, then a process is executed to provision the particular service for the first party and the second party. The connection between the service provider and the first party for delivery of services is established according to parameters of a service provider account with the first party. Likewise, the connection between service provider and the second party is established for delivery of services according to parameters of a service provider account with the second party. The process includes verifying that the service provider accounts of the first party and the second party support the particular service to be provisioned.

In one embodiment of the invention, the step of providing an interface includes displaying an image prompting a user to create a logical instance of the particular service on behalf of the first party. The step of offering participation includes displaying an image prompting a user to create a logical connection to the logical instance of the particular service that has been created by the first party, to signal acceptance on behalf of the second party. In one embodiment of the invention, upon the creation of a logical instance of the particular service, the process includes displaying an image prompting a user to offer the particular service to another party on behalf of the first party.

In another embodiment of the invention, the method for provisioning services offered by service provider for a plurality of parties comprises establishing connections and service provider accounts between the service provider and the plurality of parties for the delivery of services among the parties according to parameters of respective service provider accounts. An interface, such as a secure Web page, is provided that is accessible by parties in the plurality of parties. The interface supports logical definition of services to be provisioned by the service provider and to be associated with parties in the plurality parties, to support logical connection to the particular logically defined services by the associated parties. The interface also supports offers of particular logically defined services by one party to one or more other parties. In this embodiment, the logical definitions of particular services are processed to verify that the service provider accounts of the associated parties support the particular logically defined service. After logical connections of one or more parties to the particular logically defined service are established, the process to provision a physical instance of the particular logically defined service is executed.

According to one embodiment of the invention, the service provider consists of a communication system using technology that has been developed within the communications, enterprise data networking, electronic commerce, and carrier service provider industries to provide service in new ways particularly complementary to the provisioning process and system of the present invention.

A foundation of industry standard products and practices in the following areas is used to construct networks and to offer service, including for one example:
- Fiber optic transmission technology using WDM (wave division multiplexing) to carry additional bandwidth through the use of many 'colors' of light on a single fiber, controlled and
- Gigabit ethernet packet switching technology to accept and deliver IP data from and to customers, providing a highly reliable service.
- Electronic commerce technology to allow customers and their authorized agents to order, configure, and manage the communications services delivered and to enter into business agreements with other suppliers of services using the system's communication services.

In each of these areas a number of novel practices and inventions support and advance the communications network and services.

Configuration of links and link segments to facilitate rapid reconfiguration of interconnected packet switches is provided in support of the commercial provisioning system. In a metropolitan area, fiber optic cables are typically installed in rings to provide an alternate route diverse path in the case of physical failure or interruption of a fiber optic link. Some of the fiber or fiber transmission capacity in each ring is reserved for use in the face of such a failure. The rules used by the networking equipment to react to such failures are usually governed by protocols that assume that the network is configured as a ring or as a set of interconnected rings.

In an enterprise data network, fiber optic connections between packet switches are usually made point to point in a 'redundant, dual-homed, tree like' topology to facilitate rapid reconfiguration with the minimum loss of service. The revised spanning tree protocol under standardization in IEEE 802.1 is a suitable protocol for establishing the failover rules in the network. The recently completed link aggregation standard, IEEE Std. 802.3ad, is another-providing for resiliency of parallel links.

A set of rules and heuristics is provided for the use and configuration of fiber optic transmission facilities, purchased or leased in ring configurations, as a set of links comprising selected concatenated segments from a set of rings. The resulting configurations have two benefits in networks:
1) They allow the use of high bandwidth low cost enterprise data packet switching equipment, while providing high network availability through the use of rapid reconfiguration with redundant links and switches.
2) They allow the use of general mesh topologies to support redundancy, rather than restriction to rings or rings with extraordinary interconnection arrangements.

In addition to realizing these topologies by concatenating physical segments from rings, equipment is provided so that a link can comprise logical segments, each consisting of a wavelength of light transmitted and received by WDM (wavelength division multiplexing) equipment attached to the physical fiber segment running between two locations on a ring. Electronic switching of the transmitted information stream at each ring node from one wavelength on a segment to another wavelength on the next, or to an attached device, allows for electronic rearrangement of the set of links connected to each packet switch in the network.

Modification of the Spanning Tree for resilient redundant connection of an edge device to a network is provided in support of efficient provisioning. The IEEE 802.1 Spanning Tree provides for redundant connections within a network, where data transmitted from one attachment to the network to another is constrained to follow a loop free path. It reduces the physical topology of the network to an active topology that is both loop free ('tree') and fully connected ('spanning').

In the network, 'demarcation devices' situated on individual customer's premises can provide for redundant connections to the rest of the network. Selection of one link in preference to another can be achieved by use of the spanning tree or a similar protocol. However, only traffic that is transmitted by or destined for a given customer is allowed to reach that customer's demarcation device (a packet switch). It is not desirable that a demarcation device act as a transit link in the network, ensuring full connectivity from one part of the network to another, either during a reconfiguration of the network or while the active topology is stable. Rather the network should partition if there is no other connectivity between the two halves.

In the past, the simple selection of one link or another for connection to the interior of a network has been performed by a simple physical layer redundancy scheme that interrogates the health of the links from a demarcation device switch to the network. One link is configured as a primary link and the secondary link is activated only if the primary fails a simple connectivity test to the remainder of the network, e.g. loss of the transmitted light signal.

The system improves on this prior arrangement, while not allowing the demarcation device to participate in the active topology of the network, by choosing the active link from the demarcation device to the network on the basis of the spanning tree information received by the device, but not allowing it to forward or generate spanning tree information. This arrangement protects against a failure in the network that causes the switch connected to by the demarcation device to be separated from the main body of the network.

Security arrangements for a packet switched data transmission network using LAN switches are provided. The network makes use of packet data switching equipment that is typically used in private data networks. While such equipment has facilities that can be used to construct ad-hoc security arrangements, the system's public service network requires a systematic approach to its security.

The network ensures that no data is ever delivered to a service interface other than the service interface(s) explicitly authorized by the customer whose network attached equipment transmits the data, and that no data is received on a service interface other than data from the service interface(s) explicitly authorized by the customer whose network attached equipment is receiving the data.

The mechanisms that the system uses to ensure such secure delivery include:
(a) The organization of switches within the network architecture and the placement of security functions within that architecture.
(b) Assuring a unique identity for each device connected to a service interface anywhere within the network.
(c) Checking that identity at points identified within the network (see a. above)
(d) Ensuring that the identity of each of the customers/parties controlling the assignment of service interfaces and the connections between them is securely known.
(e) Providing for the known delegation of control within the constraints imposed by (d) above.

The network architecture is distinguished by its use of switches organized into:
- Demarcation devices. These are typically, but not necessarily, located on a single customer's premises. It is assumed that that customer will secure physical access to his or her own premises. Each demarcation device supports a number of service interfaces that the customer uses to connect to the network, and one or more 'drops' that connect to access ports on access switches (see below).
- Access switches. These are located on premises physically secured. In addition to access ports they have interior ports that connect to interior switches within the network.
- Interior switches. These form the heart of the network.

The identity of the connected device is ascertained by observing packets transmitted by the device at the service interface of the demarcation device. Each packet contains a source MAC address. This is captured by the service interface and a notification sent to the system managing the network using normal network management protocols. The management system assures itself that the MAC address is unique. Filters are configured on access ports to ensure that only packets with source MAC addresses checked in this way are accepted from the attached demarcation device. Similarly only packets from source addresses that are permitted to transmit to the demarcation device are allowed from the access port to the demarcation device.

Interior switches do not filter or otherwise constrain connections on the basis of the identities of devices attached to either the transmitting or receiving service interfaces. This allows the active topology maintained by interior switches to scale independently of the number of active connections through the network, and to reconfigure rapidly since information concerning individual connections does not have to be communicated or changed during reconfiguration.

A range of options is offered to customers to control changes to the source MAC address used on the interface, including automatic configuration, latching of a learnt address, explicit manual configuration, and identification of attempts at intrusion into the network.

The system is capable of extension to allow additional security protocols to establish the identity of the connecting system. Once that identity has been established, the MAC address of the transmitting system is used, as described above, to secure connections.

Disconnection and reconnection of the device can be detected, even if the same MAC address is used throughout. This protects against attempts to masquerade once a device identity has been established.

Provision of multiple connectivity options across a packet switched network, is supported by the network, including point-to-multipoint services. The network supports point-to-point connectivity between a pair of service interfaces, multipoint to multipoint switched LAN like connectivity between a set of service interfaces, and point to multipoint connectivity. This last provides for the equipment attached at one service interface, the 'root,' to be able to transmit to one or all other interfaces while equipment attached at those interfaces can only transmit to the root. This functionality supports serving many of a service provider's customers through a single connection to the network. It is supported by screening the delivery of data packets on the basis of the packets' source addresses.

Spatial reuse in a packet based data network with a ring topology is accomplished in the preferred network configuration. A number of proposed equipment products support packet transmission services on metropolitan area network fiber rings where the bandwidth consumed on the ring for transmission can be 'reused' once a packet has reached its destination.

The network architecture, uses packet switches with rapid reconfiguration protocols and VLAN technology to constrain packets that might otherwise be broadcast or flooded to the necessary paths between access ports in the network. Thus a combination of existing standard technologies serves to support the same robust efficient communications goals sought by new non-standard equipment.

Embodiments of the invention include a method of provisioning services offered by a service provider for a plurality of parties including providing an up to date representation of the potential and actual uses of the service provided to allow a service user to conduct transactions using or involving the service with other parties:
o Where the 'up to date' representation of the service includes a record of all pending actions as they are created;
o Where the elements in the representation, when displayed to one of the other parties, convey sufficient information so as to explain the proposed transaction;
o Where the representation includes images and forms provided by HTML and XML, or other markup languages;
o Where the security of the representation and its communication to all parties is known by them to be sufficient to trust the data and origin/authorship of the proposed transaction e.g. is conducted using 'certificates' and secure web technology.

Embodiments of the invention also include a method of provisioning services offered by a service provider where the service provider provides an interactive model containing a number of elements (represented by images or forms) and allows selective changes in the relationship between those objects (either by manipulating or moving images, or by recording an object in an electronic form), those selective changes representing a participant's agreement to engage, participate in, and/or change the parameters of participation in the service.

Embodiments of the invention allow for electronically conveying changes from one user (party) to another (party) to convey requests for participation or changes in participation of the service.

In one embodiment, the invention provides a system that graphically represents a connection or service relationship as a wire with two ends or plugs that can be connected into or moved between sockets or interfaces independently by the two participants in a proposed transaction to facilitate their independent control over the delivery and acceptance of service(s).

In general, embodiments of the present invention provide for provisioning services, such as communication bandwidth in an environment that supports fast fulfillment, multiple customer provisioning, strong security, prevention of unauthorized disclosures associated with the service, and prevention of unauthorized changes to the service being provisioned.

Fast Fulfillment: One of the key values of embodiments of the present invention in the communication services embodiment is the ability for connecting communications channels with many and varied locations. The number of destinations reachable from a single provisioned link will be very large. Given the dynamic nature of modern business, it follows that the services available via the communication network will be changed frequently. Embodiments of the present invention support provisioning intervals that are short compared to the time between when the future need for a new service or change in service is realized by he customer and the time that the new service or change in service must be available. In short, provisioning of the service involved in the transaction does not act as a bottleneck in a customer's business.

Promote Multiple Customer Provisioning: The rich connectivity available from the novel network architecture of the communication embodiment means that connectivity between different businesses will be prevalent. For example, a communication link could be provisioned between an enterprise campus and the Internet Service Provider that serves the enterprise. To promote this inter-business connectivity, the provisioning method provides a mechanism that allows one customer to initiate provisioning that will result in changes to the service of another customer. This is called Multiple Customer Provisioning.

Strong Security: Given the strategic role that customers' networks play in their businesses, it is vital that the provisioning process prevents malicious or inadvertent disruption of a customer's service. There are two primary aspects to this security accomplished according to embodiments of the present invention. (1) Information about the configuration of a customer's service is kept confidential and not disclosed to third parties without authorization by the customer. This means that strong authentication and encryption protects the exchange of configuration information, as part of the provisioning service. 2) Since Multiple Customer Provisioning is supported, security requires that a customer authorize any change to the customer's service that is requested by another party before it is invoked.

Accordingly, embodiments of the present invention provide a system for provisioning services in support of agreements between parties that use the service, which promotes ease of use, security and low transaction costs and times.

### BRIEF DESCRIPTION OF THE FIGURES

The present invention will be described further, by way of example only, with reference to preferred embodiments thereof as illustrated in the accompanying drawings, in which:
Fig. 1 illustrates exchanges involved in a transaction between a first party and a second party which involves the provisioning of services by a third party service provider according to the prior art.
Fig. 2 illustrates exchanges involved in a transaction between a first party and a second party, which involves the provisioning of services by a third party service provider according to an embodiment of the present invention.
Fig. 3 is a diagram of a commercial communication service with an Internet based provisioning server according to an embodiment of the present invention.
Fig. 4 illustrates logical constructs representing a provisioning view of a service interface.
Figs. 5A-5C illustrate logical constructs representing wire reel views for virtual connections in a communication service supported by an embodiment of the present invention.
Fig. 6 illustrates a first step in a process for creating a point-to-point virtual connection.
Fig. 7 illustrates a second step in the connection of a virtual connection to a service interface.
Fig. 8 illustrates a third step in the process for creating a point-to-point virtual connection.
Fig. 9 illustrates account resources and resource contacts in a user interface for provisioning service according to an embodiment of the present invention.
Fig. 10 illustrates a general flow of a provisioning session.
Fig. 11 illustrates command flow serving provisioning requests by a single user.
Fig. 12 illustrates command flow serving provisioning requests by two users.
Fig. 13 shows logical results of provisioning with shared administrative authority.
Fig. 14 illustrates results of a provisioning process involving two accounts.
Fig. 15 illustrates the structure of a event log in a provisioning system according to an embodiment of the present invention.
Fig. 16 illustrates the structure of an event log as seen by a single user in one embodiment of the present invention.
Fig. 17 shows an opening screen for a browser based user interface for a provisioning system according to one embodiment of the present invention.
Fig. 18 shows the opening screen of Fig. 17, with service locations expanded for an account.
Fig. 19 shows the opening screen of Fig. 17, with virtual connections expanded for an account.
Fig. 20 shows a service interface detail screen for the user interface of Fig. 17.
Fig. 21 shows a screen for use in the creation of a logical circuit in the provisioning system of Fig. 17.
Fig. 22 shows a screen illustrating virtual connection details for the provisioning system of Fig. 17.
Fig. 23 illustrates a dialog box used for the creation of the virtual connection.
Fig. 24 illustrates a dialog box for logically connecting a virtual connection to a service interface in the provisioning system of Fig. 17.
Fig. 25 illustrates a fiber MAN network physically laid out as a ring, and partitioned as segments of the secure MAN of an embodiment of the present invention.
Fig. 26 illustrates a generic access connection to a secure MAN according to an embodiment of the present invention.
Fig. 27 illustrates a basic single tenant access arrangement.
Fig. 28 illustrates a redundant switch access service with parallel drops.
Fig. 29 illustrates a parallel single tenant access service with two drops coupled to a single access switch.
Fig. 30 illustrates a fully redundant single tenant access service according to one embodiment of the invention.
Fig. 31 illustrates a multi-tenant access arrangement for use with the secure MAN of an embodiment of the present invention.
Fig. 32 illustrates another example multi-tenant access arrangement.
Fig. 33 illustrates a co-location facility access arrangement for connection to the secure MAN of an embodiment of the present invention.
Fig. 34 illustrates another example co-location facility access arrangement.
Fig. 35 illustrates an example of the use of point-to-point virtual connection services according to an embodiment of the present invention.
Fig. 36 shows an example of a multipoint-to-multipoint virtual connection service.
Fig. 37 illustrates a point-to-multipoint virtual connection service for a secure MAN network according to an embodiment of the present invention.
Fig. 38 illustrates the use of tagged and non-tagged service interfaces for access to a secure MAN network according to an embodiment of the present invention.
Fig. 39 shows a format for a packet transmitted within the secure MAN network of an embodiment of the present invention.
Fig. 40 is a graph for illustration of the operation of the bandwidth control algorithm according to one embodiment of the present invention.
Fig. 41 illustrates a simplified secure MAN network, and configuration of a virtual connection is within such network.
Fig. 42 illustrates a simplified secure MAN network, as in Fig. 41, with another example configuration of a virtual connection.
Fig. 43 illustrates a simplified secure MAN network as in Fig. 41, showing configuration for a point-to-multipoint virtual connection.
Fig. 44 illustrates a simplified secure MAN network as in Fig. 41, showing configuration for a multipoint-to-multipoint virtual connection.

### DETAILED DESCRIPTION OF EMBODIMENTS

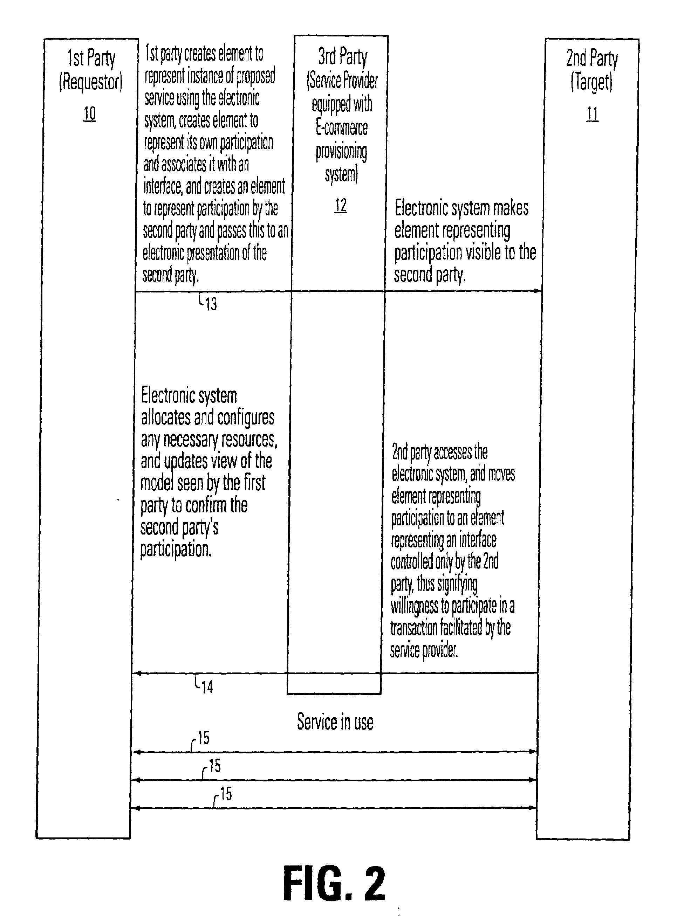

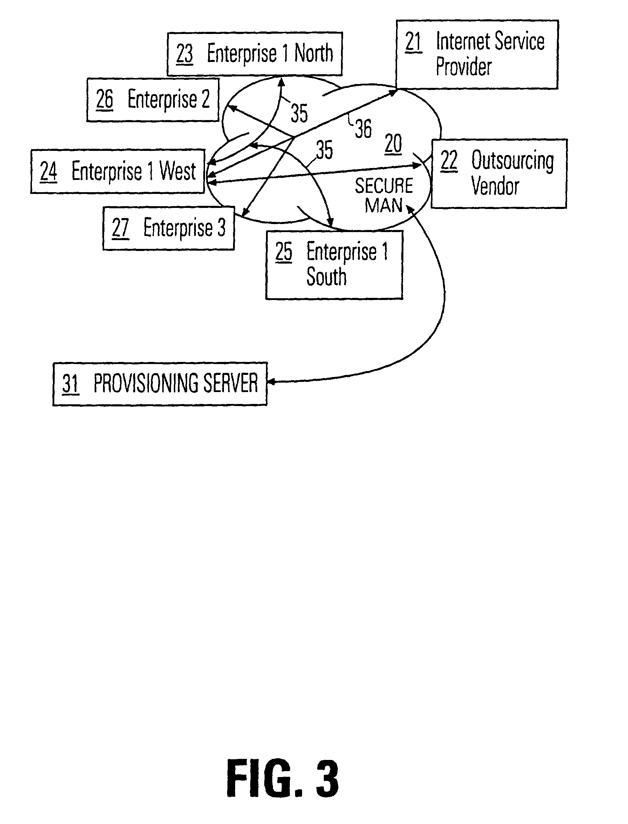

A detailed description of embodiments of the present invention is provided with reference to the figures, in which Fig. 2 illustrates exchanges involved in a provisioning system according to an embodiment of the present invention, and Fig. 3 illustrates a system including a service provider network and a provisioning server implementing an embodiment of the present invention.

The Fig. 2 illustrates the exchanges between a first party 10 (in the role of a requestor) and a second party 11 (in the role the target) for a transaction which involves services provided by a third party 12. A electronic commerce provisioning system is coupled to the third party system. According to an embodiment of the present invention, the requestor offers the target 11 an opportunity to participate in a particular service, as represented by the arrow 13. In a preferred embodiment, the provisioning system provides an interface to the first party requestor by which the requestor 10 creates an element of a first type, which represents an instance of proposed service using the provisioning system. Likewise, the requestor 10 creates an element of a second type in the provisioning system to represent its own participation and associates the element of the second type representing with an element of a third type representing an interface to the service between the first party 10 and the third party service provider 12. Finally, the requestor 10 creates an element of the second type to represent participation by the second party and passes this element to an electronic representation of the second party maintained in the provisioning system of the third party service provider 12. The electronic system makes the element of the second type visible to the second party target 11.

Upon viewing the element of the second type representing an offer for it to participate in the virtual connection, the target 11 accepts or refuses the offer as represented by the arrow 14. In a preferred embodiment, the second party target 11 matches an element of the second type representing the target's participation with a logical element of the third type representing an interface controlled by the target 11. This signifies acceptance of the offer, and willingness to participate in a transaction that is facilitated by the service provider 12. The electronic provisioning system allocates and configures any necessary resources to make an instance of the service to which the parties have agreed, and updates a view of the logical model being presented to the first party which confirms the second party's participation in the service.

Once the service has been provisioned and the first party requestor 10 notified, the agreed service is automatically available for use as represented by the arrows 15 in Fig. 2.

In the preferred embodiment, elements of the first type are described as 'virtual connections', those of the second as 'plugs' (attached to the ends of a virtual connection), and those of the third 'sockets'. The creator of a 'virtual connection' (the first party in the transaction) uses the electronic system to convey the 'plug' to the second party, so that when a representative of the second party accesses the electronic system he or she can inspect the 'plug' and move it to a 'socket' that represents one of the interface points available to that second party for the service to be provisioned. To allow the first party the same choice of potential interface points, the participation of that first party in the transaction is also modelled as the placing of a 'plug' into a 'socket'. This permits extension of the model to one in which a first party establishes a relationship with the service provider by creating a 'virtual connection' and then creates two or more 'plugs' to be offered to two or more parties to be placed in mutual communication or to receive services from the service provider to allow tham to engage in mutual transactions.

The first party may also associate additional information with a 'plug' for use by a second party in determining whether the connection is acceptable or which 'socket' should be used. The content of any such information is not used by the electronic system itself, but the facility to convey it provides the users of the system with the ability to keep all relevant information together.

Fig. 3 illustrates a communications service example, based on provisioning links among a variety customers within a secure metropoliton area network MAN. In Fig. 3, a secure MAN is represented by cloud 20. A number of customers, including Internet service provider 21, outsourcing vendor 22, enterprise 1 with a North campus 23, a West campus 24, and a South campus 25, and enterprises 2 26 and enterprise 3 27, are coupled to the secure MAN 20 by appropriate physical and logical interfaces. A provisioning server 31 is coupled to the secure MAN 20, either using the secure MAN medium or by other communication channels to the switches and other resources in the secure MAN, and facilitates transactions among the customers of the secure MAN 20 for establishing communication channels, such as the virtual connections discussed above, and provisioning of services agreed to by the customers with the resources of the secure MAN 20. In one embodiment, configuring and allocating of services within the secure MAN 20 to support the links among the customers, is managed by the provisioning server using a management protocol such as Telnet or SNMP, under which filters and other control data structures in the switches are configured. In this manner, the provisioning server is available via the internet to customers and potential customers of the secure MAN 20, using standard technology.

Virtual connection services allow rich connectivity among all customer locations on the secure MAN network. Examples include:
- A mesh connected, multipoint-to-multipoint virtual connection service 35 dedicated to a single enterprise for connecting campuses together.
- A point-to-multipoint virtual connection service 36 connecting an Internet Service Provider to customers.
- A point-to-point virtual connection service 37 connecting an enterprise location to an outsourcing vendor.
- A point-to-point virtual connection service 38 connecting two enterprises.

A single customer can have simultaneous intra-enterprise and extra-enterprise communications using the secure MAN, provisioned according to the embodiments of the present invention.

A detailed description of one example of the secure MAN provisioning embodiment follows. Many variations of the logical structures and accounting techniques can be used in alternative embodiments, as suited for the needs of particular service providers and of particular customers. In this secure MAN example, the following concepts and definitions are used to set up and describe the provisioning service.

### 1. Account and Account Name

An account is an entity that has a business relationship with the secure MAN. Typically this means that the secure MAN will be billing this entity for service and the entity is therefore a customer. However, it is possible for an entity to establish a relationship with the secure MAN for provisioning purposes in which this account acts as an agent (outsourcer or systems integrator) for other Accounts. In such a case, the secure MAN may not bill the first Account.

Each account will have a globally unique account name. One of the important uses of this account name is to let users (see below) from other Accounts identify an account. As an example, an account may want to have the name "Safe Backup R Us." In order to ensure uniqueness, the selection of an account name will be collaborative between the secure MAN and the Account.

The account name can be public or unlisted at the option of the customer. If the name is public, then the provisioning system will make the account name visible to users from other Accounts.

A given customer may setup multiple Accounts with the secure MAN service.

### 2. User

A user is a person or machine that is not part of the secure MAN service. A user interacts with the secure MAN provisioning system via a standard Web browser for example. The browser could be "driven" by a person or a script; the information flows for automatic provisioning are the same in both cases. An account can control the amount of automation by controlling the use of scripts.

Each user will have a globally unique user ID and an associated password, which is used by the secure MAN service for security purposes during the provisioning process. Also, each user will have a home \* MERGEFORMAT account. If the home account ceases to exist, then the user will be expunged from the secure MAN service provider provisioning system.

In addition to username/password authentication, the exchange between a user and the provisioning server is strongly authenticated in both directions with digital certificates in some embodiments. The secure MAN service provider will assist customers, in these embodiments, with procurement of personal digital certificates that are signed by a Certificate Authority trusted by the secure MAN service provider.

### 3. Master User

When an account is created, at least one master user for the account is created. A master user is a user with the special right to create new users and control the administrator lists, described below, for the account.

### 4. Resources and Resource Owner

There are number of types of resources. Each resource is "owned" by a single account, the resource owner. The resource owner is assigned at the instant that a resource is created. The resource owner has control over the resource in the sense that a resource cannot be created, modified, or destroyed without the concurrence of a user identified by the master user for the resource owner. The resource owner may be charged when the resource is created, modified, or destroyed. The resource owner may also be charged on a recurring basis during the existence of a resource.

If an account ceases to exist, all resources owned by the account are removed from the secure MAN provisioning system.

Each type of resource is described in the following subsections.

### 1. Service Interface

A service interface is the physical point at which a customer can attach his equipment to the secure MAN network for the purpose of using secure MAN services. In this secure MAN example, the service interface is a physical socket for receiving the connector of a cable capable of carrying 10/100/1000 Mbps Ethernet, or other high speed interface. The customer will connect the port of a router, or other network intermediate device, to. the service interface with the appropriate type of cable.

The ownership of a service interface is assigned to the account that requests the installation. Note that if an account ceases to exist, the physical service interface is not necessarily removed or physically modified. However, such a service interface is blocked from being used for secure MAN Service until it is again assigned to an owner.

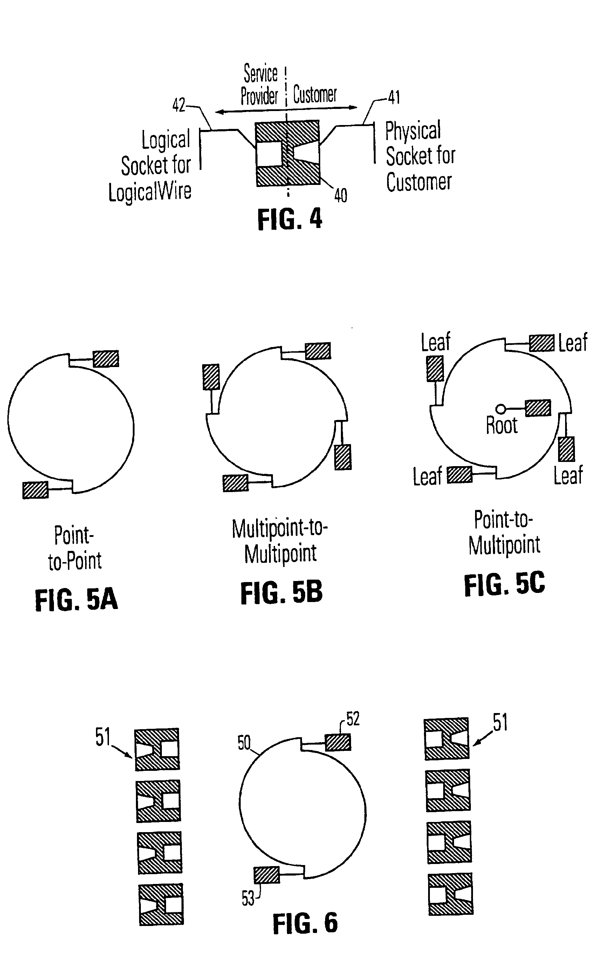

For the purposes of provisioning, the service interface 40 is viewed as shown in Fig. 4, as having two sides. The physical side 41, as described above, which faces the customer and a logical side 42 that faces the secure MAN network. A service interface that is activated for service will have a virtual connection "plugged in" to it. Thus the secure MAN side 42 of the service interface 40 is considered to be a logical socket for attachment of a virtual connection.

### 2. Virtual connection

A virtual connection is the vehicle for connectivity between two or more service interfaces. Ownership of a virtual connection is assigned to the home account of the user who requests the creation of the virtual connection. If the resource owner ceases to exist, the virtual connection is destroyed.

For purposes of provisioning, a virtual connection can exist without being associated with any service interfaces. As an abstraction, a virtual connection can be thought of as a reel of (logical) wire. Figs. 5A, 5B and 5C graphically portray wire reels that represent the three types of virtual connection, point-to-point, multipoint-to-multipoint and point-to-multipoint, respectively.

As an example of the application of the models for virtual connection and service interface, the steps in provisioning of a new point-to-point virtual connection are shown in the Figs. 6-8. The first step is to create the Virtual connection 50, having plugs 52 and 53, as shown in Fig. 6. (This assumes that service interfaces, generally 51, in the figure had already been created.) This step illustrates that a virtual connection can exist without being associated with any service interface.

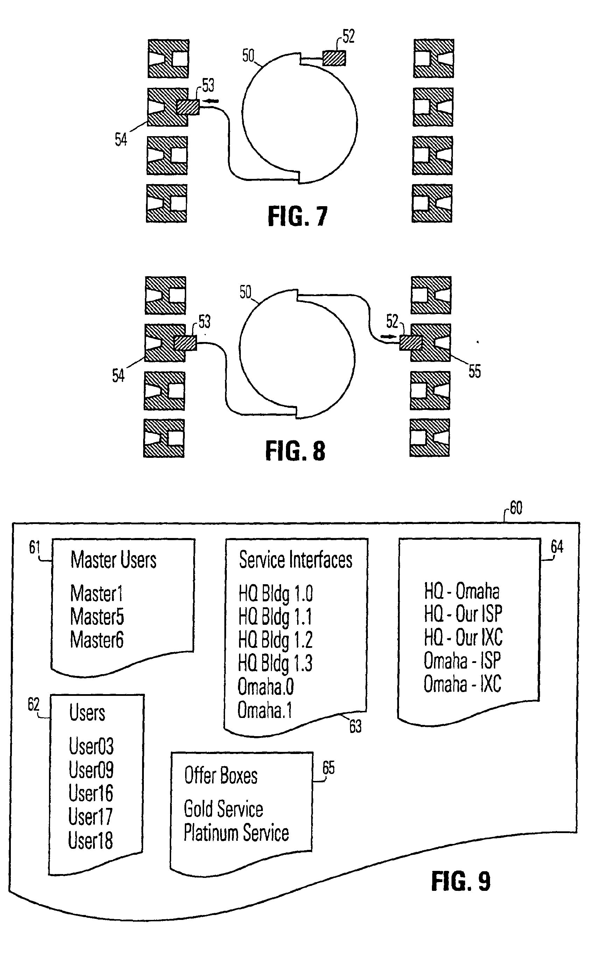

Step 2 is to plug in one end 52 of the virtual connection 50 to a service interface 54 as shown in Fig. 7.

Step 3 is to plug in the other end 53 of the virtual connection 50 to a service interface 55 as shown in Fig. 8. For point-to-multipoint and multipoint-to-multipoint virtual connections, more than the graphical construct of the virtual connection can have more than two ends that can be plugged in to service interfaces.

### 3. Account

An account, described above, must be established with the provisioning server in order to obtain service in this example. As such it is a resource used in provisioning, and mentioned again in this list.

### 4. Master User

A master user gives the account a vehicle (person or machine) for interacting with the secure MAN provisioning system. Thus a master user is a resource.

### 5. User

When a master user creates a user, this gives the account another vehicle (person or machine) for interacting with the secure MAN provisioning system. Thus a user is a resource.

The owner of a user is the home account of the master user that created the user. As previously described, if the owner of the user ceases to exist, the user is removed from the secure MAN provisioning system.

### 6. Offer Box

The offer box is a repository for requests to the account for provisioning actions. A typical example is a request to attach a virtual connection, created by a different account, to a service interface.

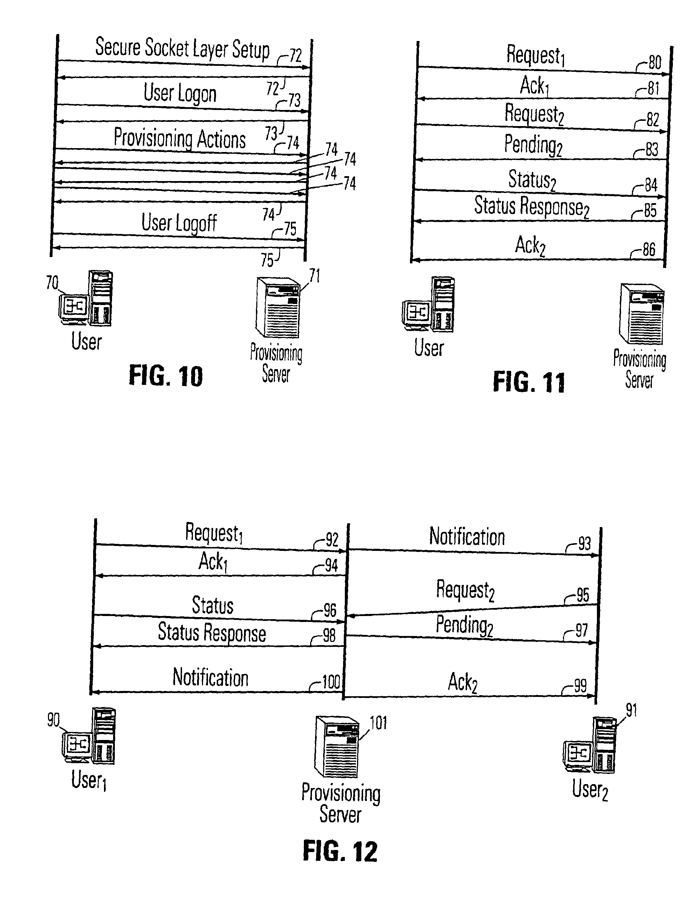

An account may have more than one offer box. For example, consider an account that offers five different services. This account could set up five offer boxes, one for each service. In this way, after ensuring that the Account's customers understood which offer box to use, new virtual connections could be attached to the proper service based on the offer box specified by the Account's customer. Fig. 9 portrays an example of the resources owned by an account. Thus, an account 60, controls resources such as master users 61, users 62, service interfaces 63, virtual connections 64, and offer boxes 65.

Resources are identified for provisioning in the secure MAN provisioning system. There are a number of ways to identify each resource, which may be used alone or in combination. Examples are described in the following subsections. For a given type of resource, not all of the identifier types may be used.

### 1. Internal identifier

An internal identifier is a globally unique identifier. No other resource of any type has the same value. The secure MAN service provider assigns the internal identifier. It is not shown to users.

### 2. User Recognizable identifier

This identifier is assigned by secure MAN service provider to ensure that it is unique within the proper scope. It will be shown to a user. The identifier will also be used by the user for identification of resources to the provisioning system.

### 3. Name

This identifier is defined by collaboration between the user and the secure MAN service provider. The user will typically strive to make the identifier meaningful to him while the secure MAN service provider will ensure that the identifier is unique within some appropriate scope. The appropriate scope will depend on the type of resource being identified.

Note that the account name described above is an instance of the name identifier. Similarly, the user ID discussed above is another example of the name identifier.

### 4. User Alias

This is a free form string assigned by the user. It will typically be used to remind the user about what each resource is and how he is using the resource. The alias could also be used as a generic user assignable attribute.

### 5. Secure MAN Alias

The secure MAN service provider assigns this identifier. It is not shown to users. The identifier is free form but work methods will probably enforce a structure. This identifier is intended to facilitate the internal secure MAN provisioning process.

Table 1 and Table 2 show examples of the five kinds of identifiers as applied to the six types of resources. The internal identifier examples were made up with an eye toward including geographical information via airport codes.

A user identifier may consist of a user selected portion concatenated with a short string supplied by secure MAN service provider such that the result is unique within the desired scope.

**Table 1.**

| Examples of Unique identifiers | | | |
|---|---|---|---|
| Resource Type | Internal identifier | User Recognizable identifier | name |
| Account | 01.01.SFO.265.891.469 | AC000.655 | Stanford_Education_Net_0002 |
| Master user | 01.02.SJC.331.891.470 | MU001.556 | Bill_Smith_1 |
| User | 01.03.ATL.587.891.475 | US001.223 | Susan_Suddenly_CALTrain |
| Virtual connection | 01.04.LAX.636.890.997 | LW000.889 | HQ_to_Fremont_DNA |
| Service interface | 01.05.SFO.774.891.476 | SI002.006 | Eng_Router_Port_6_CM12 |
| offer box | 01.06.DIA.558.891.477 | OB010.006 | Bizwire_Bond_Gold |

**Table 2.**

| Examples of Aliases | | |
|---|---|---|
| Resource Type | user Alias | secure MAN Alias |
| Account | Stanford Ed Net | Cardinal:Stanford:WinBigGame |
| master user | Kid | Tasman:HQ |
| user | Sue@HQ | Sudden:Train:Sue |
| virtual connection | HQ_to_Fremont | PaloAlto:Fremont:HQ |
| service interface | Engineering Router 6 | HP6:HPENG:HP6 |
| offer box | BondInfoGold@Bizwire | Biz:Gold:Wire |

### 6. Resource Contact

The resource contact is a form of address to which secure MAN service provider will send information relating to a resource. Examples of the address include a telephone number, an email address, and a facsimile number. Examples of the information include a notification of a change and a request for authorization of a change.

A resource contact is defined for each account, each virtual connection, and each service interface.

### 7. Administrator Lists

For each resource, there is an associated list of users called the administrator list. It is allowable to have a user in an administrator list whose home account is not the resource owner.

For a given account, the content of the administrator list for each virtual connection, service interface, and offer box owned by the account is under the control of the master users. In other words, a master user can add or remove users for the administrator lists.

The administrator list for each user in an account is always the list of master users for the account as implied by the relationship between users and master users.

### 8. Secure MAN Provisioning Server

This is a Web server in one embodiment that interacts with the user Web browser. A set of operations support systems and databases that stand behind the secure MAN provisioning server, for allocating and configuring resources, and for accounting for use of resources, but these are not visible to the user.

The provisioning process from the customer's point of view is described with reference to Figs. 10-17. In terms of the definitions used by the system as described above, it is the view of a user. When a user accesses the provisioning server, the interaction will typically follow four steps as shown in Fig. 10.

The process begins with the user 70 establishing contact with the provisioning server 71. The first step 72 is to setup the Secure Socket Layer protocol. Use of SSL ensures that all information exchanged is strongly encrypted. In addition, both the user and the provisioning server have a security certificate installed. Thus the user is assured that it is communicating with the provisioning server and vice versa.

The next step 73 is the user logging on to the system. By identifying and authenticating the user, the provisioning server can constrain the actions of the user to those for which the user is authorized.

In the next steps 74, the provisioning actions are executed. There arc two types of provisioning actions. The first type is request. A request is meant to trigger a secure MAN service provider action to make a change in service. The second type is a status check. This includes examining an existing service. It is possible that a request will take more than a few seconds to fulfill, thus a status check can also be used for checking on the status of an earlier provisioning request.

Usually multiple requests are used to achieve a provisioning goal. In some cases, a single user can issue all of the requests that are necessary. An example of this is shown in Fig. 11. In this case, two requests are needed. The first request 80 is immediately fulfilled and acknowledged (81). The second request 82 requires longer to be fulfilled and thus the user is given a pending indication 83. The pending indication message 83 includes an estimate when the request will be fulfilled. In this example, the user makes one check 84 on the status of the outstanding request. The status response 85 contains information similar to the pending indication. Finally the second request 82 is acknowledged 86.

The user Interface to the provisioning server allows multiple requests to be bundled and submitted at one time. Even so, the various requests are tracked and fulfilled individually.

In some cases, requests must be made by multiple users to achieve a provisioning goal. Fig. 12 shows an example where two users 90, 91 cooperate to achieve a provisioning goal. In this example, the request of user₁ 90 is just a request for user₂ 91 to make its own request.

In the sequence shown in Fig. 12, user1 90 issues a request 92 directed at user2 91. The provisioning server 101 issues a notification 93 to user2 91. Also, the provisioning server 101 issues an acknowledgement 94 to user1 90. In response to the notification 93, user2 91 issues request 95. The provisioning server 101 sends a pending notification 97 to user2 91. In the meantime, user1 90 issues a status request 96 to the provisioning server 101. The provisioning server 101 provides a status response 98. Upon processing the request 95, the provisioning server 101 issues a notification 100 to the user1 90, and an acknowledgement 99 to user2 91.

More details about requests are described below.

When the provisioning actions are complete, the user logs off the system. When there is an interval of no activity, the provisioning server logs the user off of the system. The inactivity time interval can be set by the user to meet the user's workflow needs.

Any master user can request the creation of a new virtual connection. The user must specify the account that is to own the new virtual connection and, of course, the user must be a master user for this account. The request must contain the type (point-to-point, point-to-multipoint, multipoint-to-multipoint) as well as any other properties such as class of service details. In addition, the administrator list for the new virtual connection is initially set to all of the master users for the owning account. (A master user can modify the administrator list after it is created.)

When a virtual connection is created, it is not attached to any service interfaces. Thus, a user will usually want to request attachment to service interfaces shortly after creating the virtual connection. The details depend on the type of virtual connection.

### Attaching Point-to-Point and Multipoint-to-Multipoint Virtual connections

A user who initiates attachment of a point-to-point or multipoint-to-multipoint virtual connection to a service interface must be a member of the administrator list for the virtual connection. If a user is a member of the administrator list for both the virtual connection and the service interface, then the user can make a direct request to attach the virtual connection to the service interface.

If a user is a member of the administrator list for the virtual connection but not for a service interface, then a two step process must be used:
Step 1: The user on the virtual connection administrator list requests that the virtual connection be "offered" to a specific offer box for a specific account. If the target account name and offer box identifier are public, the provisioning server will provide help, e.g., a pulldown menu, identifying the needed information to the requesting user. The result of the request is that an entry is made in an offer box of the target account and the account contact is notified of the existence of this entry. The entry includes the identifier of the virtual connection. (Other information is included as well.)
Step 2: A user on the administrator list for the offer box accesses the offer box entry. This user then accepts the offer and specifies that the virtual connection be attached to a service interface for which the user is also on the associated administrator list. If this request is fulfilled, the contact for the virtual connection is notified.

### Attaching Point-to-Multipoint Virtual connections

The procedures for attaching a point-to-multipoint virtual connection to a service interface are identical to those described with respect to point-to-point and multipoint-to-multipoint virtual connections with the addition that requests must specify either root or leaf.

### Notifications for Attaching a New Virtual connections to a Service Interface

When a virtual connection is attached to a service interface, the resource contacts for the other service interfaces to which the virtual connection is already attached are notified according to the rules in Table 3. These notifications are in addition to those already described above.

**Table 3.**

| Service Interface Notifications for a New Attachment | |
|---|---|
| Type of virtual connection | Contacts Notified |
| Point-to-Point | Service interface on other end (if virtual connection is attached) |
| Multipoint-toMultipoint | All other service interfaces to which the virtual connection is attached. |
| Point-to-Multipoint | If the Root is attached, all service interfaces to which a Leaf of the virtual connection is attached; else the service interface to which the Root of the virtual connection is attached. |

Either detaching a service interface or attaching a service interface can change the connectivity for an existing virtual connection. Each is described in the next two subsections.

### Detaching from a service interface

A request to detach a virtual connection from a service interface can be made by a user that is on either the virtual connection administrator list or the service interface administrator list. The request is fulfilled immediately.

Table 4 details the notifications that are sent when the request is fulfilled.

**Table 4.**

| Notifications for a Detachment | |
|---|---|
| administrator list Membership of requesting user | Resource contacts Notified |
| Point-to-Point virtual connection | |
| virtual connection | All service interfaces |
| service interface | virtual connection and other service interface |
| virtual connection and service interface | Other service interface |
| Multipoint-to-Multipoint virtual connection | |
| virtual connection | All service interfaces |
| service interface | virtual connection and other service interfaces |
| virtual connection and service interface | Other service interfaces |

| Point-to-Multipoint virtual connection | |
|---|---|
| virtual connection | If Root detached, all service interfaces; If Leaf detached, service interface for detached Leaf and service interface for Root |
| service interface | virtual connection; If Root detached, all service interfaces for Leaves; If Leaf detached, Service interface for Root |
| virtual connection and service interface | If Root detached, all service interfaces for Leaves; If Leaf detached, service interface for Root |

### Attaching to a Service Interface

The procedures are identical to those described with reference to new virtual connections to a service interface.

### Changing virtual connection Properties

A virtual connection has properties beyond its connectivity. For example, multiple classes of service can be associated with a virtual connection. These properties must be specified when the virtual connection is first created.

A user from the administrator list for the virtual connection can request changes in these properties. The request is fulfilled as quickly as possible. When it is fulfilled, the resource contacts for all service interfaces to which the virtual connection is attached are notified.

Table 5 summarizes requests and notifications for this example of the provisioning system.

**Table 5.**

| Requests and Notifications | | |
|---|---|---|
| Request Type | Administrator lists Allowed to Make the request | Resource Contacts Notified |
| Create New virtual connection | master user for an Account | None |
| Attach virtual connection to a service interface | virtual connection and service interface | See Table |
| Offer virtual connection to an Account | Virtual connection | Account |
| Offer Leaf to an Account | Virtual connection | Account |
| Offer Root to an Account | Virtual connection | Account |
| Accept Offer and attach to a service interface | offer box and service interface | virtual connection plus as shown in Table |
| Detach virtual connection from a service interface | virtual connection or service interface | See Table |
| Change virtual connection Properties | Virtual connection | All service interfaces associated with the virtual connection |

Secure MAN virtual connection provisioning includes capabilities to promote connectivity between customers, including multiple customer provisioning.

In terms of virtual connection provisioning, connecting between different customers means establishing a virtual connection attached to service interfaces owned by different accounts. There are two mechanisms to facilitate this provisioning, including shared administrative authority, and opaque information pass through.

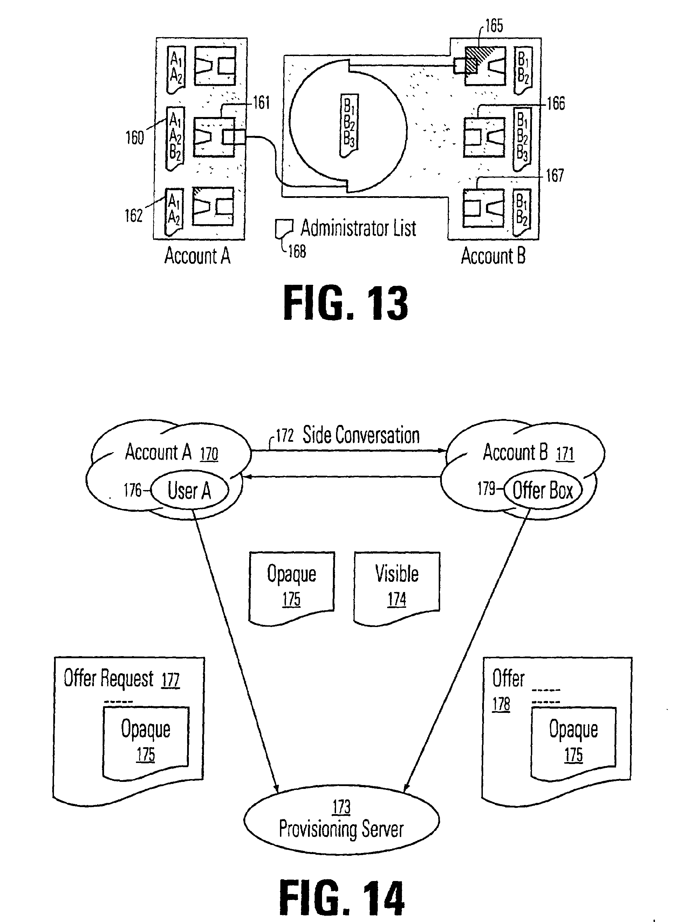

In the shared administrative authority mechanism, a master user for one account adds a user from another account to the administrator list for a service interface owned by his home account. An example is illustrated in Fig. 13.

In this example, a master user has added user B₂ to the administrator list 160 for the service interface 161 in the set 162 owned by account A. With the set of administrator lists shown in the figure, user B2 can create the point-to-point virtual connection and attach it to the service interfaces 161, 165, 166 and 167, because B2 is included in the Administrator lists for all these service interfaces, as well as the Administrator list 168 for the virtual connection.

The conditions under which account A gives control of a service interface to account B are beyond the scope of the provisioning system. Since account A granted control, it is reasonable to assume that account A and account B have a trusted relationship.

In opaque information pass through mechanism, the offer request is used. The user making the offer request can insert information into the request that is opaque to the provisioning server. This information is deposited into the offer box along with the other information related to the virtual connection being offered.

Fig. 14 shows how the opaque information can be used in a two account provisioning scenario. The process begins with a side conversation 172 between account A 170 and account B 171. The nature of the side conversation is dependent on the business relationship between the two Accounts. For example it could be an automated process or an exchange of facsimile messages.

During the Side Conversation 172, account B 171 can provide two sets of information to account A 170. One set 174 contains information about account B's secure MAN services such as the account name. Note that if account B 171 has a policy to make the account name unlisted, the Side Conversation is a good way for account A to learn the account name that is required for formulating the offer request. The key characteristic is that this information is understandable to the provisioning server 173. The information may be opaque to account A 170.

The second set 175 of information is opaque to the secure MAN provisioning server 173. account B 171 is free to include any information. It could even encrypt the information and make it opaque to account A 170 as well.

After the side conversation 172, user A 176, from account A 170, formulates an offer request 177. The provisioning server 173 visible information 174 can be used to help formulate this request 177. In addition, user A 116 includes the provisioning server 173 opaque information 175 in the offer request 177. The result is that the opaque information 175 is used in the offer 178, and placed in the offer box 179 for account B 171.

Since account B 171 creates the provisioning server 173 opaque information 175, it has real potential for use by the account B user in accepting the offer. Some possible uses include: (1) an identifier for the Side Conversation to aid in reconciling the provisioning event with account B's purchasing database, (2) an identifier for account A to ensure that the provisioning is being requested by a trusted partner, (3) an encrypted version of the secure MAN service provider visible information in order to compare the offer with what was agreed with account A, (4) a service interface identifier to be used in accepting the offer, and (5) the identity of an account B employee responsible for accepting the offer in order to expedite the provisioning.

The possibilities are large since there are virtually no constraints placed on the secure MAN service provider Opaque information. The process of trading opaque information is easily extended to more than two Accounts.

### Logs

Logs are maintained in this example system of all provisioning activities. Both users and the service provider can use these to review past activities. Using a log, an account can audit past operations, the service provider and an account can resolve billing disputes, and an account can model current provisioning requests based on previous Provisioning requests.

According to a basic log structure, a separate log is maintained for each administrator list. For each change event related to the resource for which the administrator list was created, an entry is made in the log. A change event can be any of a change requested by a user in the administrator list for the resource, and a notification to the contact for the resource.

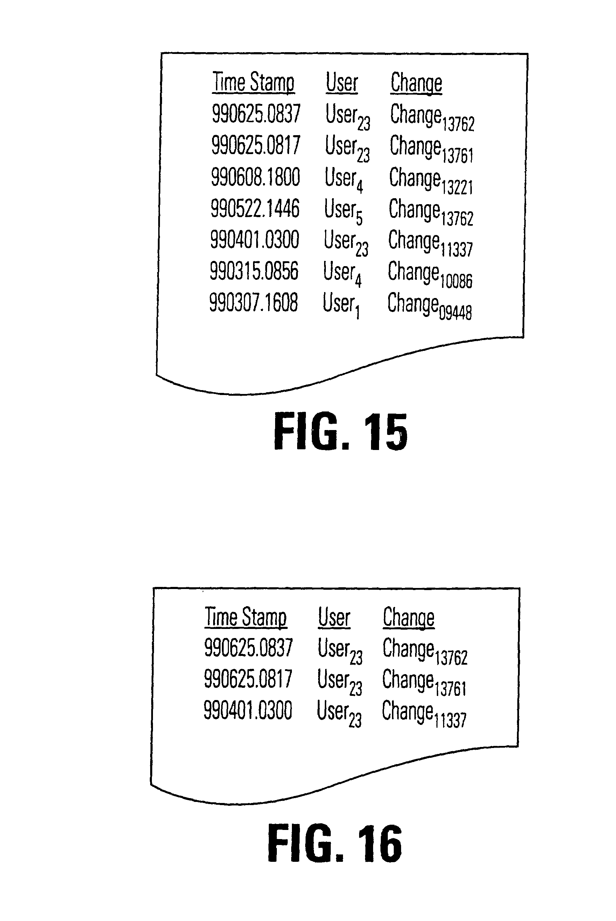

The log entries are in reverse chronological order. Each entry consists of a time stamp, the user identifier, and a description of the change event. Fig. 15 illustrates a log.

In this embodiment, logs are made accessible via the provisioning server according to the restrictions described below. Each log entry will be retained in the Log for one year, for example. The resource associated with an administrator list can cease to exist, e.g., a virtual connection can be cleared. In this case, the log remains available until all of its entries age out.

The master users of an account have access to the logs for all resources owned by the account.

A user that is a member of an administrator list can access the associated log. However, only the entries for which this user is listed in the log will be visible. Thus, the view of the log in Fig. 15 for user₂₃ is that shown in Fig. 16.

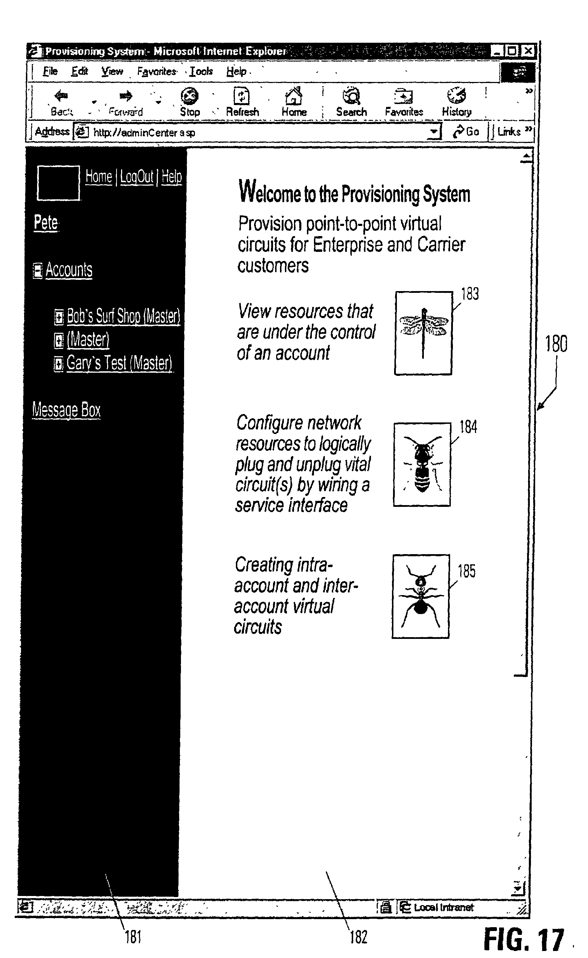

Fig. 17 through Fig. 24 illustrate examples of user interface displays for a browser based provisioning system according to an embodiment of the present invention. The interface in this example are served using the Hypertext Markup Language HTML or the Extended Markup Language XML, over the Hypertext Transfer Protocol HTTP or other internet based protocol. In alternative systems, the interfaces are served by other languages and protocols, including for example an electronic mail protocol which displays the interface in an electronic mail client program rather than a browser.

Fig. 17 shows an opening screen 180. The opening screen 180 includes a first region 181 which identifies a user, accounts to which the user is associated, and messages which are directed to user. The opening screen 180 includes a second region 182 which includes links represented by buttons 183, 184 and 185 which are used for viewing resources under the control account, configuring network resources logically to plug and unplug virtual connections, and creating intra-account and inter-account virtual connection virtual connections respectively. In this example, the user Pete is associated with three accounts.

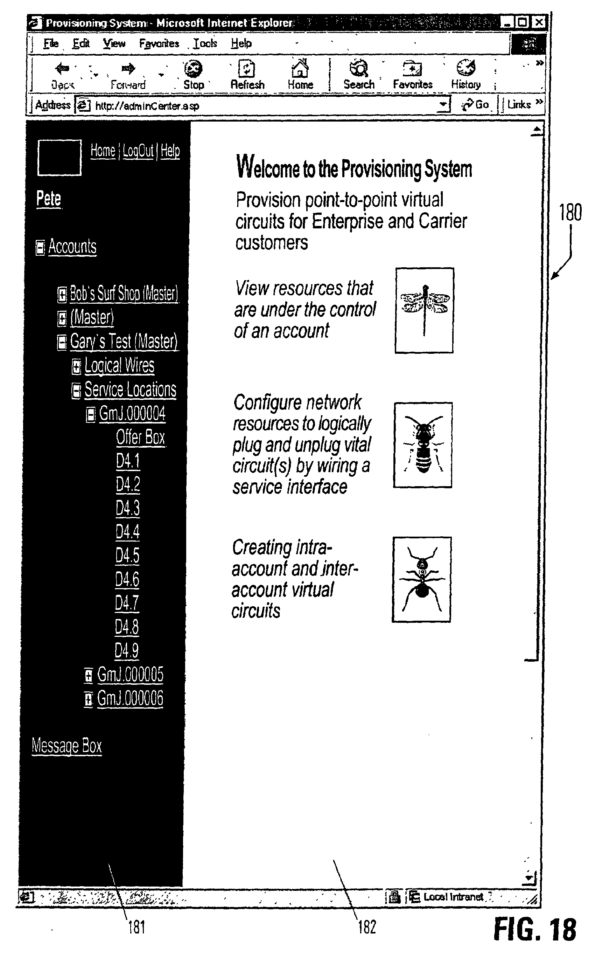

Fig. 18 illustrates the opening screen 180 listing service interfaces and an offer box for a service location for a particular account. Thus, the service location identified by the name GmJ.D0004 includes an offer box and service interfaces D4. 1 to D4.9. The offer box in this example is associated with a particular service interface, that could be available to one or more accounts. In other embodiments, the offer box is associated with the accounts.

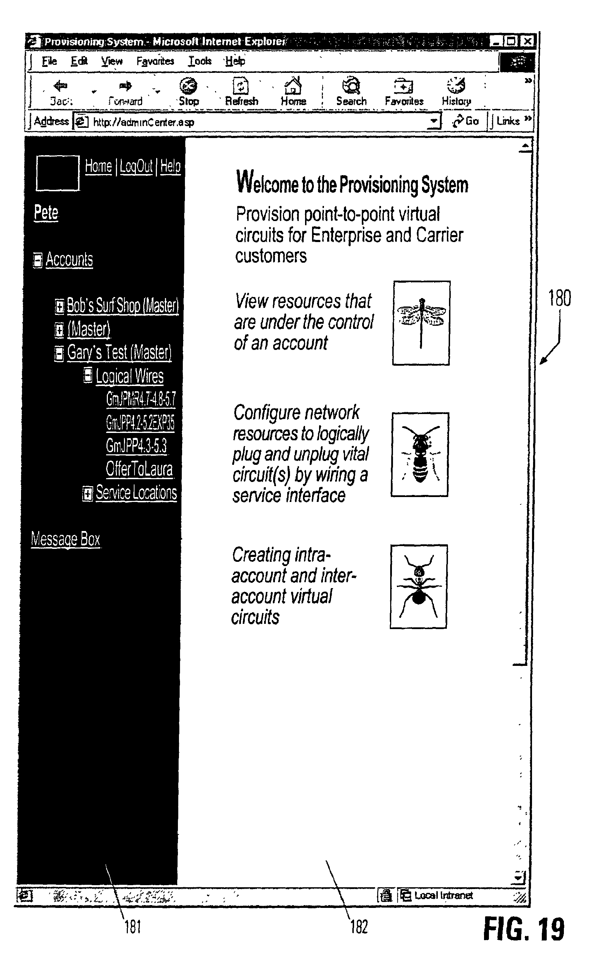

Fig. 19 illustrates the opening screen 180 in which the virtual connections for the account are illustrated in the region 181. Thus, the account having the name Gary's Test includes three virtual connections and one offer to another account outstanding.

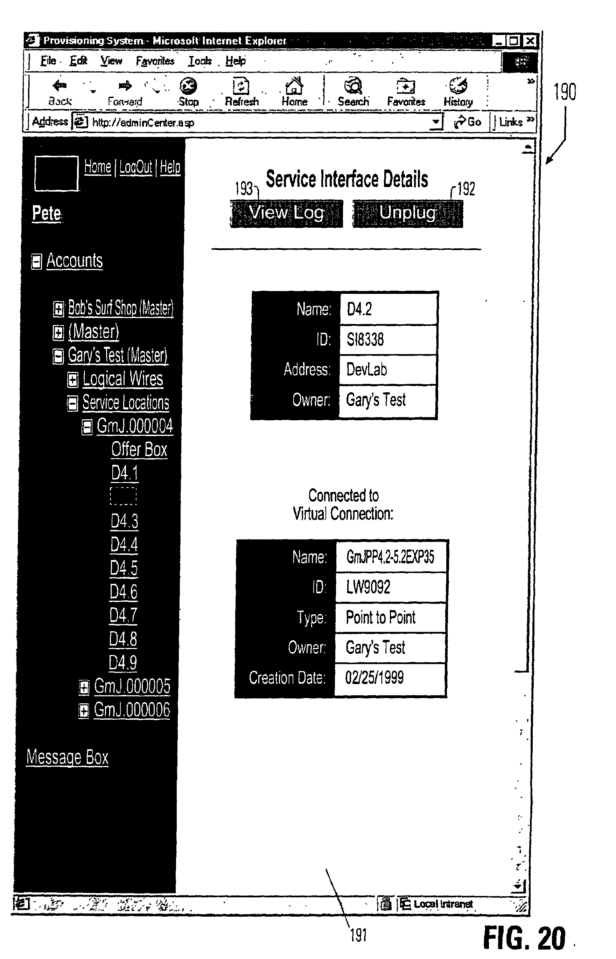

Fig. 20 illustrates a user interface screen 190 in which service interface details are displayed for the service interface D4.2. A variety of parameters of the service interface are shown in the region 191. These parameters include parameters of the service interface itself, and of a virtual connection to which is connected. Buttons 192 and 193 are provided which lead to dialog boxes for unplugging the virtual connection from the service interface, and to a log screen, respectively.

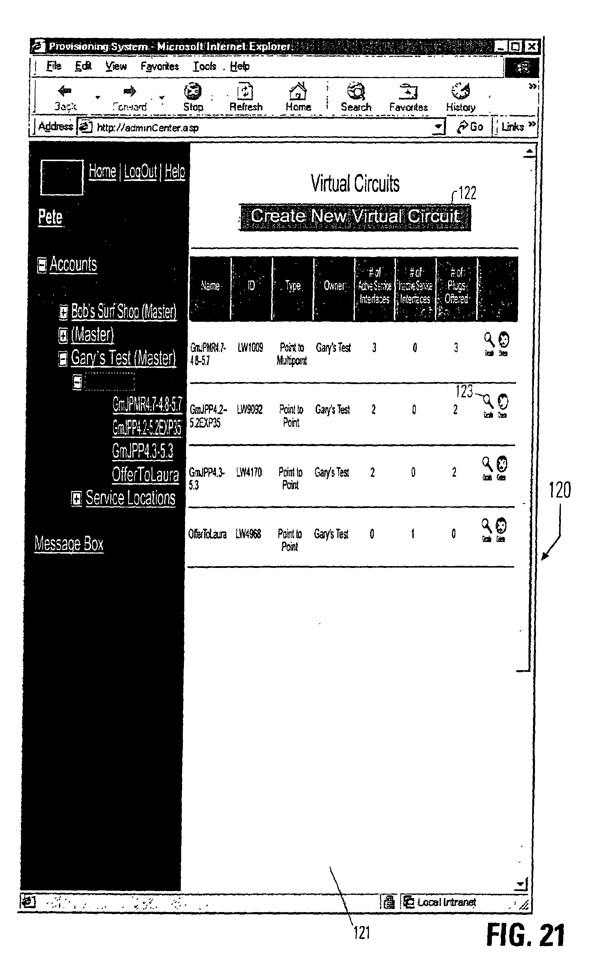

Fig. 21 illustrates a user interface screen 120 showing details of virtual connection virtual connections in the region 121. All four virtual connections associated with the account are shown, including wires that are connected, and a wire which is associated with a pending offer - having no active service interfaces. Also a button 122 is provided leading to dialog boxes for the creation of new virtual connection virtual connections. In addition, buttons, such as the button 123 are provided for causing display of additional details for particular virtual connection.

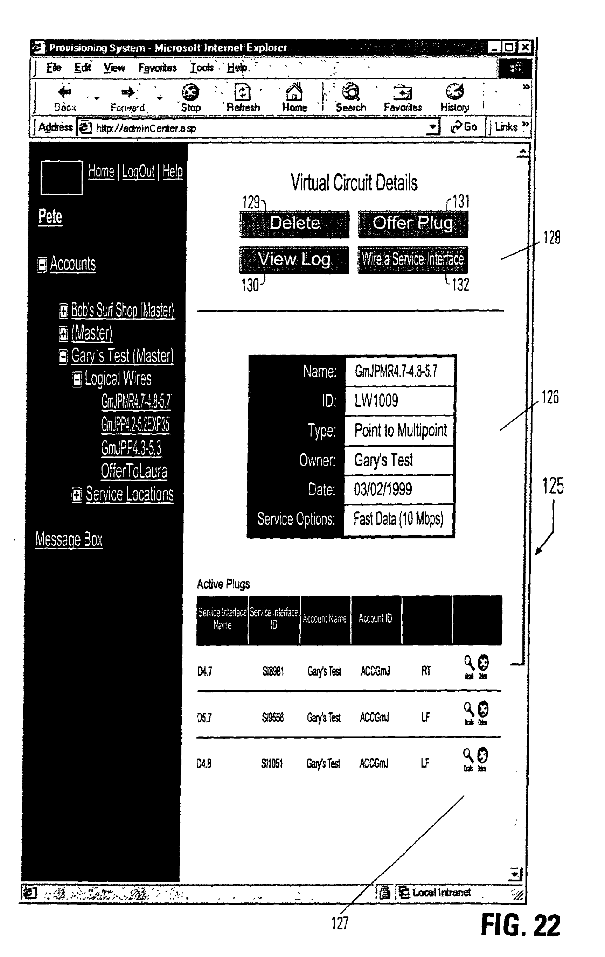

Fig. 22 illustrates a detail screen 125 for a particular virtual connection. The screen 125 includes region 126 showing parameters of the virtual connection, region 127 showing parameters of active plugs in the virtual connection, and region 128 which includes a first button 129 for deleting a virtual connection, a second button 130 for viewing a log concerning the virtual connection, a third button 131 leading to dialog boxes for offering a plug to the virtual connection, and button 132 leading to dialog boxes for connecting a service interface to the virtual connection.

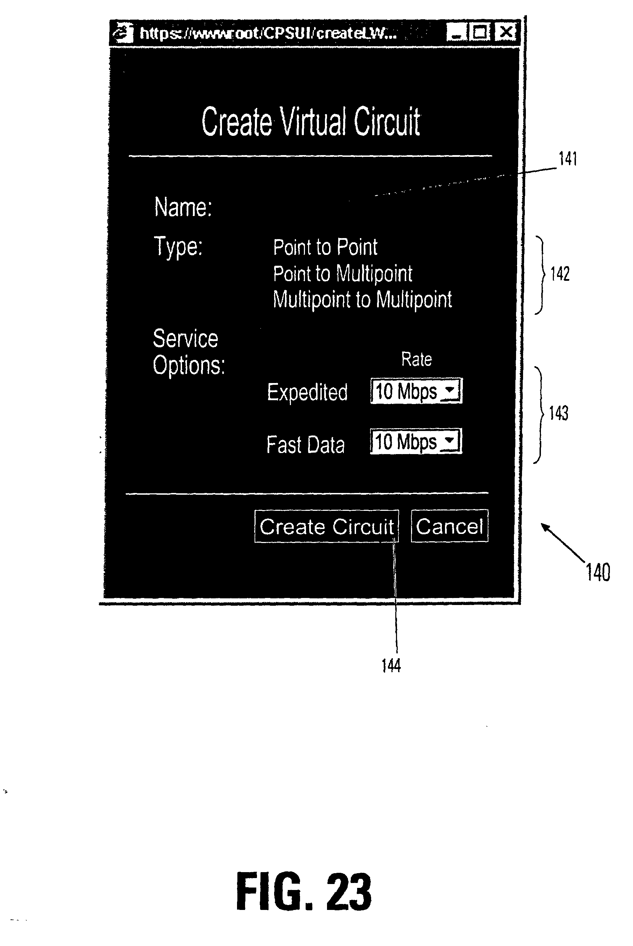

Fig. 23 illustrates a dialog box screen 140 used for creating a virtual connection virtual connection. The screen includes a text box 141 for accepting input naming the circuit, input selection tools in region 142 for selecting a virtual connection type, and input tools in region 143 for selecting various service options, such as data rate and the like for the virtual connection. In addition, a button 144 is included to cause creation of the virtual connection.

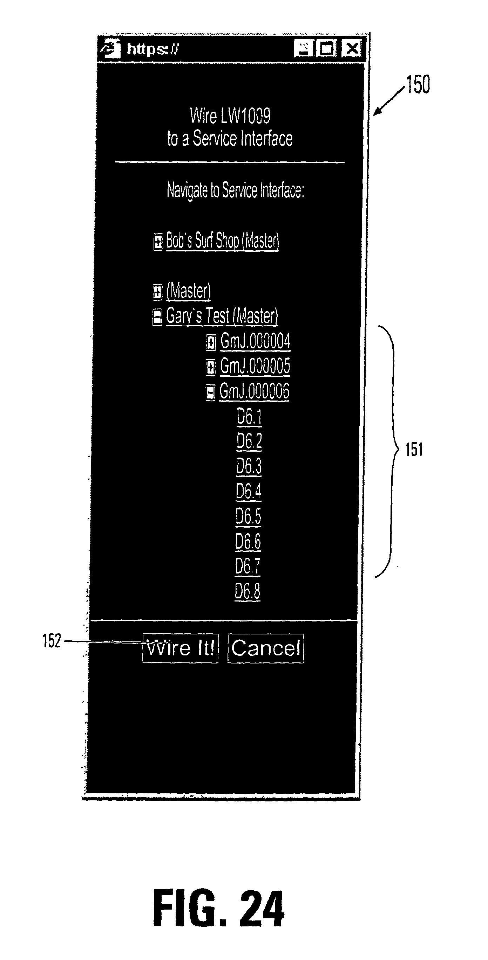

Fig. 24 illustrates a dialog box 150 for connecting a virtual connection to a service interface. From the button 132 of Fig. 22, the dialog screen 150 comes up for particular virtual connection. In this case, the service interfaces available for connection are shown in the region 151. Button 152 is included to cause a selected service interface to be connected with virtual connection.

In one preferred embodiment, the service which is subject of the provisioning process is high bandwidth, secure network connections, involving customers that make a physical connection to communication media under management of the provisioning server. One example medium is optical fiber links of a MAN, interconnected using the SONET protocol, Serial Reuse Protocol, or other protocols.

SONET (Synchronous Optical NETwork) is a digital transmission technology that provides high availability communication between switching nodes. In networks comprising communicating switching nodes connected by fiber links in a ring topology, SONET provides protection against the loss of communications between any pair of nodes due to failure of links or intervening nodes by using the alternate path in the ring topology.

While other network topologies, e.g. meshes, are capable of providing high availability through redundancy, fiber rings are especially important because (a) their simple topology lends itself to simple fast protection switching arrangements (b) wide deployment of SONET means fiber is often available and operationally configured in ring topologies.

Unfortunately deployment of SONET in a network comes at the expense of fully half the potential bandwidth of the fiber ring. An alternative would be to use only the fiber between a pair of nodes to support communication between them. This permits 'serial reuse' of the fiber ring to carry communication between other nodes. Such an approach is particularly attractive when data traffic is being carried. Unlike telephone traffic, data traffic, particularly that generated by TCP in the TCP/IP protocol suite, will adjust to increases or decreases in available transmission capacity. Serial reuse thus makes best use of the available resources in the normal case when failure has not occurred, while allowing the redundant connectivity of the ring to protect against failure.

The problem to be solved, then, is to make the best use of fiber rings for carrying IP (Internet Protocol) data traffic between nodes on the rings while retaining the benefits of the present SONET arrangements, notably (a) very rapid failover to backup links and switches typically within 50 milliseconds of a failure (b) timely delivery of traffic.

One available protocol is known as SRP (Serial Reuse Protocol) developed by Cisco Systems, Inc., San Jose, California, to support packet services on fiber rings. SRP is new media access protocol, providing mechanisms for 'healing' the ring in cases of failure, for determining where nodes (identified by their media access (MAC) address) are on the ring, and for confining traffic between the nodes to just that portion of the ring to allow reuse. Part of the operation of SRP gives priority to traffic already circulating on the ring (as opposed to traffic joining the ring) to ensure timeliness of delivery.

Other organizations and individuals have also proposed similar services, introducing new protocols to provide frame relay like services on fiber rings. These solutions have the disadvantage that it is necessary to build special purpose hardware to support them.

Some proposals only work in ring topologies, or at least in topologies of interconnected rings. Growing the bandwidth of such a network beyond that naturally provided by a single ring typically involves the development of additional equipment supporting the specialized hardware, and may not be possible without disrupting the service provided by the ring.

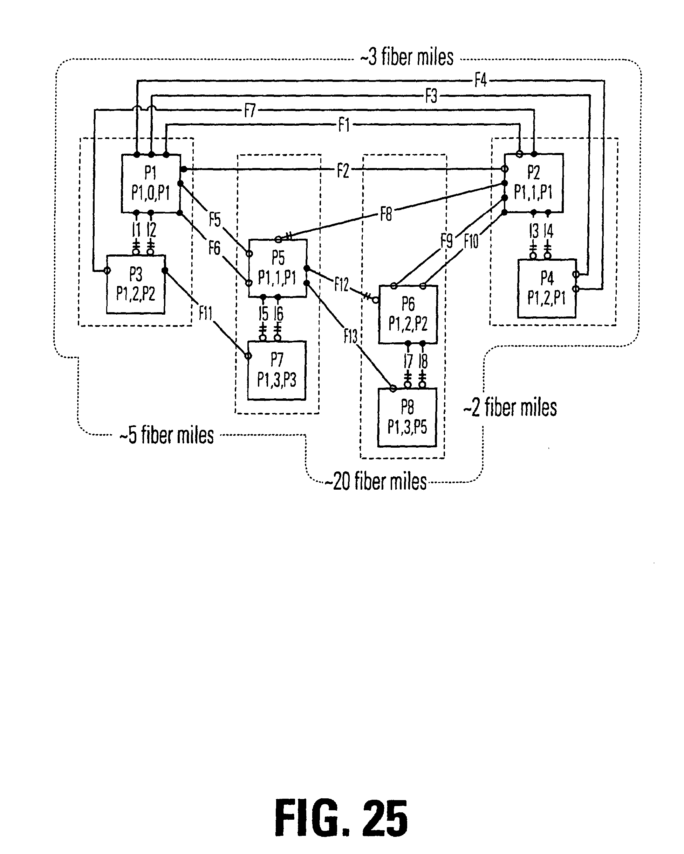

Fig. 25 illustrates a fiber ring network extending around a path of about 20 miles, which is made of bundles of fibers laid in right of ways within a metropolitan area. Segments of the ring are logically partitioned as segments of an ethernet network, configured as a tree, rather than a ring. Switches in the tree comprise standard 100 Megabit or Gigabit ethernet switches configured according to the Spanning Tree Protocol, or variations of the Spanning Tree Protocol.

In the secure MAN, 'demarcation devices' situated on individual customer's premises can provide for redundant connections to the rest of the network. Selection of one link in preference to another can be achieved by use of the spanning tree or a similar protocol. However, only traffic that is transmitted by or destined for a given customer is allowed to reach that customer's demarcation device (a packet switch). It is not desirable that a demarcation device act as a transit link in the network, ensuring full connectivity from one part of the network to another, either during a reconfiguration of the network or while the active topology is stable. Rather the network should partition if there is no other connectivity between the two halves.

In the past, the simple selection of one link or another for connection to the interior of a network has been performed by a simple physical layer redundancy scheme that interrogates the health of the links from a demarcation device switch to the network. One link is configured as a primary link and the secondary link is activated only if the primary fails a simple connectivity test to the remainder of the network, e.g. loss of the transmitted light signal.

One embodiment of the secure MAN improves on this prior arrangement, while not allowing the demarcation device to participate in the active topology of the network, by choosing the active link from the demarcation device to the network on the basis of the spanning tree information received by the device, but not allowing it to forward or generate spanning tree information. This arrangement protects against a failure in the network that causes the switch connected to by the demarcation device to be separated from the main body of the network.

In Fig. 25, switch P1 is a root of the tree, labeled P1, 0, P1 to indicate that the root of the tree is P1, the distance to the root is 0, and the upstream (toward the root) switch is P1. The interconnection of the tree can be understood by the upstream links for the switches. Thus there are no upstream links from switch P1. Switch P2 (P1,1,P1) is connected by fibers F1 and F2 to switch P1. Switch P3 (P1,2,P2) is connected by fiber F7 to switch P2. Fibers I1 and I2 are configured as backup links to switch P1 from switch P3. Switch P4 is connected by fibers F3 and F4 to switch P1. Fibers I3 and I4 are connected as backup links to switch P2 from switch P4. Switch P5 is connected by fibers F5 and F6 to switch P1. Fiber F8 is connected as a backup link from switch P5 to switch P2. Switch P6 is connected by fibers F9 and F10 to switch P2. Fiber F12 is a backup link from switch P6 to switch P5. Switch P7 is connected by fiber F11 to switch P3. Fibers I5 and I6 act as backup links to switch P5 from switch P7. Switch P8 is connected by fiber F13 to switch P5. Fibers I7and I8 are connected as backup links from switch P8 to switch P6.

The fibers F1 to F13 and I1 to I8 comprise dark fibers in the fiber ring, which have been partitioned as point to point fiber segments in the tree as shown. Thus, fiber of a single ring can be re-used spatially. That is segments of a single ring can be used independently for point-to-point links in the tree.

Customers of the secure network are connected to the switches in a variety of access configurations, examples of which are described below. In order to use the secure MAN transmission services of the network of Fig. 25, Access Service and virtual connection service are required.

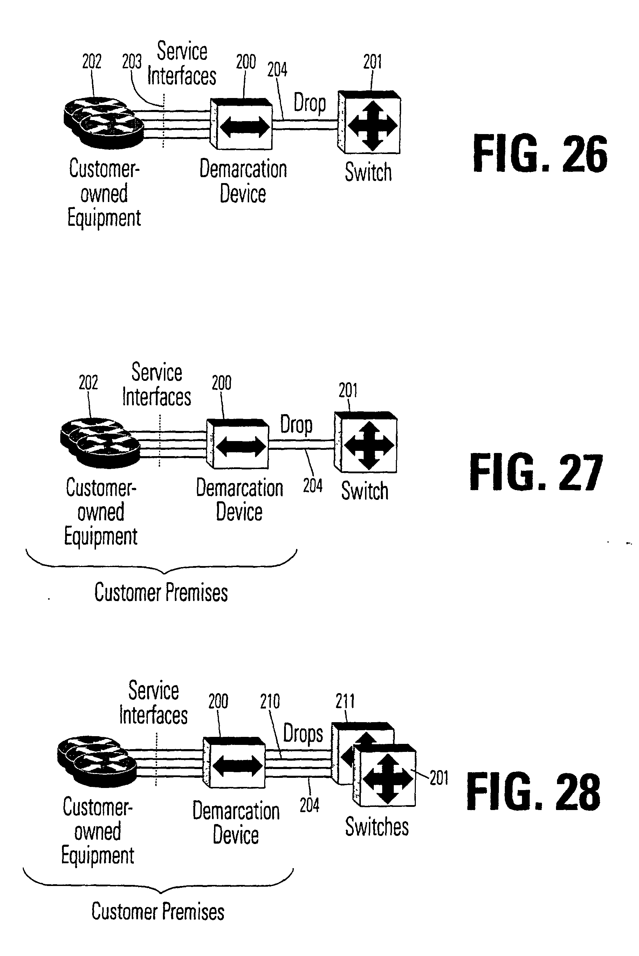

Access service is used for connecting to the secure MAN network. It provides a physical connection between customer-owned equipment and a secure MAN switch. The generic Access Service is depicted in Fig. 26, including a demarcation device 200, a secure network switch 201 and customer-owned equipment 202.

A demarcation device 200 is always situated between customer-owned equipment and a secure MAN switch. The demarcation device 200 connects to customer-owned equipment 202 through one or more service interfaces 203. The demarcation device 200 converts between the physical layer of the drop 204 and that of the service interfaces 203 . The demarcation device 200 also performs surveillance and maintenance functions.

The drop 204 will typically use a fiber optic link with at least 1 Gbps bandwidth although other transmission technologies may be used, e.g., high bandwidth wireless transmission. The type of transmission used is transparent to the customer.

The service interface 203 is the point at which customer-owned equipment 202, typically an internet protocol IP or multiprotocol router, is attached. This interface 203 runs IP over 10/100/1000 Mbps Ethernet using either a copper or fiber physical layer. An autosensing 10/100 Ethernet service interface may also be used.

There are several alternative access arrangements possible, examples of which are shown in Figs. 27-34. Fig. 27 shows a basic single tenant access arrangement. In this case, the customer-owned equipment 202 is located in a building solely occupied and controlled by the customer. The demarcation device 200 is also located within the customer premises as shown in Fig. 27. The demarcation device 200 is dedicated to the customer. The single tenant customer has several options for the use of multiple drops to improve service availability.

One option involves use of a Redundant Switch Access Service as shown in Fig. 28, in which a second drop 210 is connected from the demarcation device 200 to a different secure MAN Switch 211. This is done to maximize diversity. A failure of a drop, the switch, or the switch port will result in data flowing over the drop to be rerouted over the redundant drop in a very short time, e.g., less than 50 ms.

In Redundant Switch Single Tenant Access Service, the drops will typically reside within the same physical path from the customer premises to the first splice point at which point they will follow diverse physical paths.

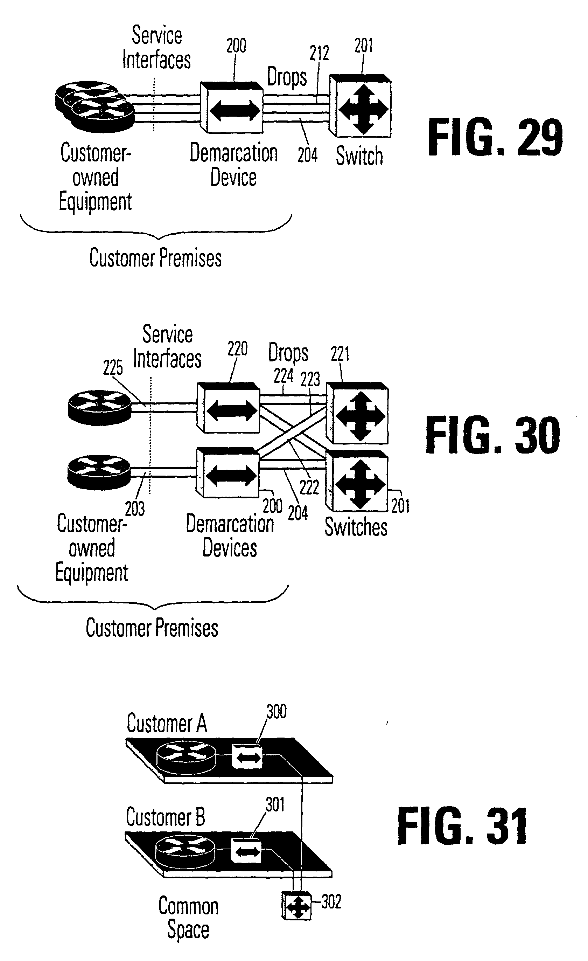

Parallel Single Tenant Access Service is another alternative, as shown in Fig. 29. In this case, drops 204 and 212 terminate on the same secure MAN switch 201. Unlike Redundant Single Tenant Access Service, the multiple drops 204, 212 can be used for load sharing in that data can flow over the drops simultaneously. In the event of a failure of a drop or the switch port, data flowing over the drop will be rerouted to the other drop in a very short time, e.g., less than 50 ms. In Parallel Single Tenant Access Service, the drops will typically reside within the same physical path from the customer premises to the point-of-presence of the first secure MAN switch.

Another access service option is Fully Redundant Single Tenant Access Service as illustrated in Fig. 30, including redundant demarcation devices 200, 220 and redundant switches 201, 221 with redundant drops 204, 222, 223, 224 for each demarcation device-access switch pair. Fully Redundant Single Tenant Access Service protects against the same failures that Redundant Switch Single Tenant Access Service does and in addition protects against failure of a demarcation device and the failure of the customer-owned equipment attached to a service interface. Both service interfaces 203, 225 are activated for customer use but the ability to simultaneously use them will depend on the details of the routing protocol being used by the customer. Similarly the ability of the customer-owned equipment to detect a failure and start using a service interface on the other demarcation device will depend on the details of the routing protocol being used by the customer.

In Fully Redundant Single Tenant Access Service, the drops will typically reside within the same fiber optic cable from the customer premises to the first splice point at which point they will follow diverse physical paths.

In other situations Multi-Tenant Access is used as shown in Fig. 31. In this case, there is a single building or campus with multiple customers. Some secure MAN Equipment will be in space not controlled by the customer. For example, the equipment could be in space leased from the landlord. In this example, the demarcation devices 300, 301 reside within the space of the customers, and are coupled to switch 302 which may or may not be located at the customer premises.

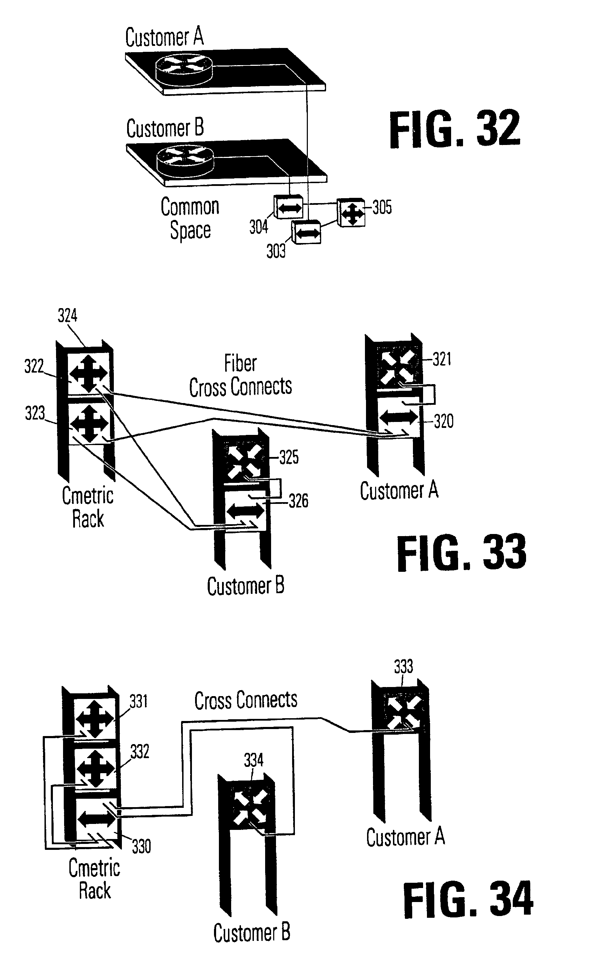

Another example is shown in Fig. 32, in which the demarcation devices 303, 304 are centrally located, and coupled to access switch 305 which may or may not be located at the customer premises.

In both of the above examples, each demarcation device is dedicated to a single customer. In addition, the secure MAN Services that a customer sees across the service interface is the same no matter which configuration is used.

There are other possibilities including a mix of centralized and distributed demarcation devices. It may also be possible and/or desirable to share a demarcation device among more than one customer.

In another situation co-location facility access is used as shown in Figs. 33 and 34. In some ways Co-location Facility Access is like multi-tenant access. However, the secure MAN service provider will have leased space in the facility in which the customer demarcation device is placed. The preferred configuration for a co-location facility is shown in Fig. 33. The demarcation device 320 is in the customer's rack 321 and dual connected back to different switches 322, 323 located in a secure MAN rack 324. These connections are effected by Gigabit Ethernet multi-mode fiber cross-connects. The customer-owned equipment connects to the demarcation device with the appropriate Ethernet cable. Additional customers may use the same co-location facility, as shown by demarcation device 326 in rack 325.

In some cases, the customer may not want to accommodate the demarcation device in his or her rack space. In this case, the configuration is that shown in Fig. 34. The demarcation device 330 is in the secure MAN rack and is dual connected to the two switches 331, 332 in the rack. The customer-owned equipment 333, 334 is connected to the demarcation device 330 via an appropriate Ethernet cross-connect. In large co-location facilities, this cross-connect will have to be multimode fiber. A demarcation device 330 can be used for supporting multiple customers.

Once customers have established connections to the secure MAN network, links among them are established using the provisioning system described above. Links in this example embodiment are referred to as virtual connections.

Virtual connection service provides the transfer of data between multiple service interfaces. Three kinds of virtual connection services in this example, include point-to-point, point-to-multipoint, and multipoint-to-multipoint.

In point-to-point virtual connections, an internet protocol IP packet delivered across a service interface is delivered to exactly one other service interface. Of course, in addition to IP, other higher layer protocols may be utilized for virtual connections of all types. This service is like a physical wire.

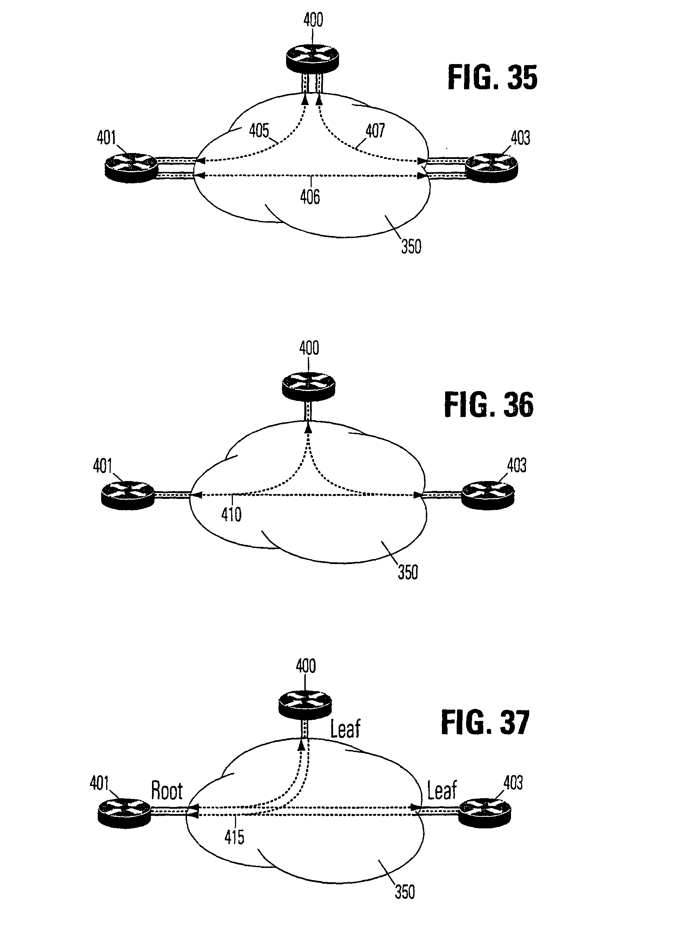

Fig. 35 shows an example of the use of point-to-point virtual connection services within the secure MAN network 350. For a point-to-point virtual connection, a service interface for customer equipment 400 is connected by link 405 to a service interface for customer equipment 401; a service interface for customer equipment 401 is connected by a link 406 to a service interface for customer equipment 402; and a service interface for customer equipment 402 is connected by a link 407 to a service interface for customer equipment 400.

In multipoint-to-multipoint virtual connections, multiple service interfaces are interconnected. A customer-owned equipment device attached to one of these interfaces can send IP packets to any of the other interfaces that have been assigned to the virtual connection service. This service is similar to Frame Relay where multiple destinations, each specified by a DLCI value, can be reached via a single physical interface.

Fig. 36 shows an example of the use of a multipoint-to-multipoint virtual connection service. In Fig. 36, a service interface for customer equipment 400, a service interface for customer equipment 401, and a service interface for customer equipment 403 are interconnected by a multipoint-to-multipoint link 410 within the secure MAN network 350.

In point-to-multipoint virtual connections, multiple service interfaces are interconnected. One interface is configured as the root and the remaining interfaces are called leaves. Fig. 37 illustrates a point-to-multipoint link 415 within the secure MAN network 350. A service interface coupled to customer owned equipment 401 is designated root of the point-to-multipoint link 415. Service interfaces coupled to the customer equipment 400 and 403 respectively are designated leaves of the point-to-multipoint link 415. A customer-owned equipment device 401 attached to the root interface can send IP packets to any of the leaf interfaces. A customer-owned equipment 400, 403 device attached to a leaf interface can only send IP packets to the root interface. This service combines the logical addressing features of Frame Relay with the security features of a physical wire. The advantage to a service provider is that he can send packets to multiple subscribers securely while each subscriber is protected from deliberate or accidental transmission to the other subscribers.

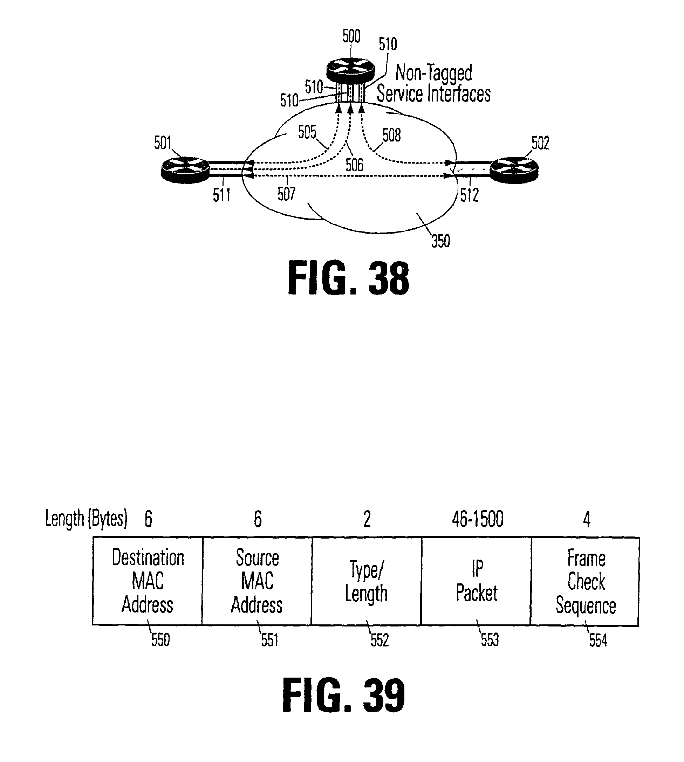

Multiple virtual connection services can be implemented on a single service interface, by tagging virtual connections. This is accomplished in this example embodiment by making use of IEEE 802.1Q VLAN tagging. Furthermore, virtual connection services between tagged and non-tagged service interfaces are supported. Non-tagged service interfaces support a single virtual connection connection. Fig. 38 shows an example of virtual connection services connecting between tagged and non-tagged service interfaces. In Fig. 38, customer equipment locations 500, 501 and 502 are connected by the point-to-point virtual connections 505, 506, 507 and 508 within the secure MAN network 350. Customer equipment 501 has three non-tagged service interfaces 510 supporting three virtual connections 505, 506 and 508. Customer equipment 501 includes service interface 511 which has three VLAN tags assigned to it, supporting virtual connections 505,506 and 507. Customer equipment 502 includes service interface 512 having two VLAN tags assigned to it, supporting virtual connections 507 and 508.

In the provisioning of virtual connections, a variety of parameters relevant to the control of traffic on the wire are assigned in some situations. For example, a virtual connection service preferably has at least one bandwidth profile associated with it. The amount of bandwidth is provisioned at the customer's request and the price of the virtual connection service will be related to the "size" of the profile and the degree that the customer's actual transmitted traffic conforms to the profile. In return for abiding by the traffic profile, the customer receives a commitment on performance of the virtual connection service.

Another parameter associated with virtual connections is class of service in some embodiments. Virtual connection services can carry multiple classes of service. The class of service for each packet is indicated by the DS byte in the IP header as per the DiffServ standard. See, [RFC2475] D. Black, S. Blake, M. Carlson, E. Davies, Z. Wang, and W. Weiss, "An Architecture for Differentiated Services", Internet RFC 2475, December 1998; and [RFC2474] K. Nichols, S. Blake, F. Baker, and D. Black, "Definition of the Differentiated Services Field (DS Field) in the IPv4 and IPv6 Headers", Internet RFC 2474, December 1998. Each class of service has a set of performance objectives that address topics such as availability, delay, and loss. The performance objectives only apply while the traffic being offered to the virtual connection service conforms to the bandwidth profile.

### Allocation And Configuration Of Secure MAN resources

Virtual connection services can be automatically provisioned as described above. This allows a network manager to control secure MAN services, from his or her own workstation. For example, a new virtual connection service can be established or an existing one can be modified in this fashion. Logical provisioning is supported by actual allocation and configuration of the resources of the secure MAN. In this example, the allocation and configuration is accomplished as described below.

Virtual connections are established by Physical Layer (layer 1) and data link layer (layer 2) contructs. Two physical layers are available in this example for service interfaces. The first is Fast Ethernet (100Mb) as defined IEEE Std. 802.3. The second physical layer is Gigabit Ethernet (1Gb) as defined in IEEE Std. 802.3.

Virtual connection service allows the exchange of IP packets among two or more service interfaces. Virtual connection services are established through the provisioning service. The wires are established at layer 2 using MAC addresses of the demarcation devices and VLAN tags.

The source and destination MAC addresses and the value of the DSCP in the IP header govern the handling of an IP packet submitted over a service interface. The details of this process are described in this section. Service performance objectives are also described in this section.

Two types of layer 2 protocols are supported; non-tagged and tagged. Non-tagged services. Fig. 39 illustrates the format of an IP packet has used in the secure MAN network of an embodiment of the present invention. The packet includes a designation MAC address which is six bytes in length, a source MAC address 551 which is the six bytes in length, a Type/Length field 552 which is two bytes in length, an IP packet payload 553 which is between 46 and 1500 bytes in length, and a frame check sequence field 554 which is four bytes in length.

Valid packets for the purposes of the secure MAN have a value of the Type/Length field greater than 0x5DC: 0x0800 designating an IP datagram and, 0x0806 designating an Address Resolution Protocol packet, or 0x0835 designating a Reverse Address Resolution Protocol packet. If the value of the Type /Length field is not one of these values, the packet is not considered properly formatted in this example.

When a unicast MAC address is used in the destination MAC address field, it must be a globally administered MAC address for the packet to be considered properly formatted. Similarly, the unicast MAC address in the source MAC address field must be a globally administered MAC address for the packet to be considered properly formatted.

A packet sent from the customer-owned equipment to a non-tagged service interface with an IEEE802.1Q tag is not properly formatted.

Tagged packets include in addition a VLAN tag field recognized in the network, for the packet to be considered valid.

The basic connectivity of all virtual connection services can be described as follows. If the customer-owned equipment sends an invalid packet, it is discarded. If the customer-owned equipment sends a valid packet, the service delivers the packet to the appropriate destination service interface(s) for the configured virtual connections identified by the packet addresses. Packets delivered to a destination service interface have the same format as that on the source service interface. In the case of a packet sent between non-tagged service interfaces, the contents of the delivered packet are unchanged.

For a packet to be delivered across by the service, it must be properly formatted and have a recognized source MAC address. Such a packet is called a valid packet. The secure MAN network discards all invalid packets sent across a service interface by customer-owned equipment.

A MAC address becomes recognized in one of two ways: using dynamic source MAC address or latched source MAC address processes. Each technique is described in the following sections.

In the case of the dynamic source MAC address process, the secure MAN network observes the source MAC address being used at the service interface. When a particular source MACaddress is first observed on the service interface, the packets carrying the MAC address, either as Source or Destination. will be discarded for a period of time not to exceed 5 seconds, for example. This is done to allow secure MAN to make security checks and ensure the uniqueness of the MAC address. If the new MAC address is already being recognized at another service interface, the resolution is as described below.

If a particular source MACaddress is observed and a different MAC address has been recognized for less than 5 minutes for example, the service interface is declared to be in the "Onlooker" state. The use of the Onlooker state is to prevent a repeater hub from being attached to a service interface with more than one customer-owned equipment attached. While the service interface is in this state, all packets sent to and from the service interface are discarded. The state is maintained until a MAC address remains continuously recognized for 5 minutes.

The recognized MAC address becomes unrecognized if the customer-owned equipment disconnects from the service interface.

In the case of the latched source MAC address process, when a MAC address is "latched" on a given Service interface, it MAC address will be recognized at the service interface no matter what other source MAC addresses are observed on the service interface in question or on any other service interface within the metropolitan area.

A MAC address can become latched in two ways. In the first method, the customer uses the provisioning system to latch the currently recognized MAC address. In the second method, the customer uses the provisioning system to put the service interface in "unlatched" mode. Then the source MAC address in the next properly formatted packet becomes the recognized and latched MAC address for the service interface provided it is unique across all service interfaces within the metropolitan area. If the new source MAC address is already being recognized at another service interface, the conflict is resolved as described below.

When the MAC address is first recognized, packets carrying the MAC address, either as source or destination, will be discarded for a period of time not to exceed 5 seconds, for example.

When a MAC address is "proposed" for recognition through any of the above methods, there is a check to see if the same MAC address is recognized at any other service interface in the metropolitan area. If there is a conflict, an error condition is noted by the network management system.

If the old and new service interfaces belong to different Accounts, the MAC address remains recognized at the old service interface.

If the old and new service interfaces belong to the same account, the MAC address will be recognized at either the new or old service interface.

The choice of the service interface where the MAC address will be recognized shown in Table 6 is dependent on the method used to establish recognition at the old service interface and the method being used at the new service interface.

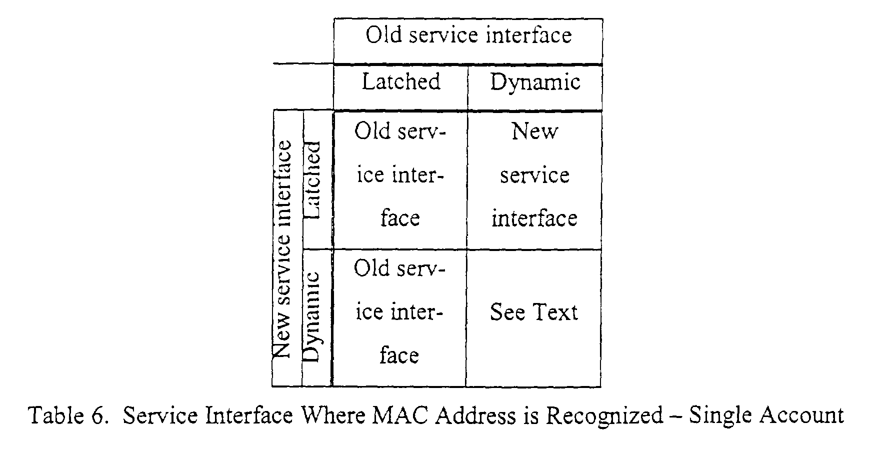

The case where both recognitions are based on dynamic learning is a special case. If the MAC address had been recognized at the old service interface for more than 1 minute, the MAC address becomes recognized at the new service interface. Else, the MAC address remains recognized at the old service interface. The reason for this procedure is to distinguish between duplicate MAC addresses and the legitimate move of customer-owned equipment from one service interface to another.

The system also checks for duplicate MAC addresses across metropolitan areas. However, this need not be done in real time. Furthermore, if a conflict is discovered across metropolitan areas, the customers involved will be notified. This will be done by notifying the contacts for the service interfaces as defined in the account provisioned for the service interface. The MAC addresses involved will continue to be recognized thus connectivity will not be impacted.

For point-to-point service, two service interfaces are associated. Packets sent into one of the service interfaces can only be delivered to the other service interface and vice-versa. The rules for delivery or discard for a packet sent into a service interface are based on the source and destination MAC addresses of the packets. These rules are laid out in Table 7.

**Table 7**

| Delivery and Discard for point-to-point virtual connection service | | |
|---|---|---|
| Source MAC address | Destination MAC address | Result |
| Unrecognized or Recognized at other than the Source service interface | Any | Discard |
| Recognized at Source service interface | Unicast and not Recognized at other service interface | Discard |
| Recognized at Source service interface | Unicast and Recognized at other service interface | Deliver |
| Recognized at Source service interface | Multicast | Deliver |
| Recognized at Source service interface | Broadcast | Deliver |

For point-to-multipoint service, two or more service interfaces are associated. One of the service interfaces is designated as the Root while each remaining service interface is designated as a Leaf. The rules for delivery and discard for packets sourced at the Root are detailed in Table 8. The rules for delivery and discard for packets sourced at a Leaf are laid out in Table 9.

**Table 8.**

| Delivery and Discard for the Root service interface | | |
|---|---|---|
| Source MAC address | Destination MAC address | Result |
| Unrecognized or Recognized at other than the Root service interface | Any | Discard |
| Recognized at Root service interface | Unicast and not Recognized at a Leaf service interface | Discard |
| Recognized at Root service interface | Unicast and Recognized at a Leaf service interface | Deliver to the Leaf service interface |
| Recognized at Root service interface | Multicast | Deliver to all Leaf service interfaces |
| Recognized at Root service interface | Broadcast | Deliver to all Leaf service interfaces |

**Table 9.**

| Delivery and Discard for a Leaf service interface | | |
|---|---|---|
| Source MAC address | Destination MAC address | Result |
| Unrecognized or Recognized at other than the Source service interface | Any | Discard |
| Recognized at Source service interface | Unicast and not Recognized at the Root service interface | Discard |
| Recognized at Source service interface | Unicast and Recognized at the Root service interface | Deliver to the Root service interface |
| Recognized at Source service interface | Multicast | Deliver to the Root service interface |
| Recognized at Source service interface | Broadcast | Deliver to the Root service interface |

In multipoint-to-multipoint service, two or more service interfaces are associated. When there are only two service interfaces, the result is very similar to point-to-point virtual connection service. Most customers will have three or more service interfaces associated for this service. The rules for delivery and discard are presented in Table 10.

**Table 10.**

| Delivery and Discard for mesh multipoint-to-multipoint virtual connection service | | |
|---|---|---|
| Source MAC address | Destination MAC address | Result |
| Unrecognized or Recognized at other than the Source service interface | Any | Discard |
| Recognized at Source service interface | Unicast and not Recognized at an associated service interface | Discard |
| Recognized at Source service interface | Unicast and Recognized at an associated service interface | Deliver to the associated service interface |
| Recognized at Source service interface | Multicast | Deliver to all other associated service interfaces |
| Recognized at Source service interface | Broadcast | Deliver to all other associated service interfaces |

Multiple classes of service are supported. Virtual connection service treats packets with different classes of service differently. The net effect is that the performance objectives vary by class of service.

There are two alternative methods in this example secure MAN network for determining the class of service for a packet:
1. A service interface can be configured such that all packets transmitted from the customer-owned equipment are treated with a specified class of service.
2. The Differentiated Services byte (DS byte) in the IP header identifies the class of service for a packet.

Examples of class of service include standard data service and expedited service. Standard data service is the service that gives the lowest level of performance and corresponds to what is currently available in IP networks. When the class is determined by the DS byte, the value 00000000 (binary) identifies fast data service. This is also the default Class of Service.

When fast data service is provisioned within an instance of virtual connection service, a bandwidth profile is specified. This causes the reserving of appropriate resources within the secure MAN network. When a fast data service packet is sent across the service interface into the secure MAN network, the virtual connection service will treat the packet as follows:
- If the packet conforms to the bandwidth profile, the performance objectives for fast data service apply.
- Else, no performance objectives apply.
   Expedited service has significantly better performance objectives than fast data service. The values of the DS Byte for this class are 10111000 (binary) and 10100000 (binary).

When expedited service is provisioned within an instance of virtual connection service, a bandwidth profile is specified. This causes the reserving of appropriate resources within the secure MAN network. When a secure MAN Expedited Service packet is sent across the service interface into the secure MAN network, the virtual connection service will treat the packet as follows:
- If the packet conforms to the bandwidth profile, the performance objectives for expedited service apply.
- Else, no performance objectives apply.
   In each instance of virtual connection service where the DS byte is used to determine the class of service for a packet, a minimum bandwidth profile and allocation of network resources are made for expedited service. The customer can increase this allocation through the provisioning system but the allocation can never be reduced below this minimum.

Additional classes of service and unrecognized DSCPs may also be provided for in the secure MAN.

When the DS byte is being used to determine the class of service, a packet sent across the service interface into the secure MAN network that has a DS byte value other than those specified is treated as a standard data service packet. Additional classes of service may be supported in the future.

Bandwidth profile is one parameter which may be associated with a virtual connection, or with other aspects of an account in the provisioning system. A bandwidth profile denoted BW(A,B) is based on two parameters:
B - the Maximum Burst Size (bytes)
A - the Average Bandwidth (bytes/ msec)

Let {*t*_{*i*}} denote the times that packets are received (arrival of the last bit) by the SIU and let {*l*_{*i*}} be the lengths of the packets in bytes. Two quantities, *b(t*_{*i*}*)* and *b'(t*_{*i*}*)* are computed and the conformance of each packet to the Bandwidth Profile is determined by the following algorithm:$\text{Step 1: Set} {\text{b'(t}}_{\text{i}} \text{)} \text{= min {} {\text{b(t}}_{\text{1}} \text{)} \text{+} {\text{A(t}}_{\text{i}} {\text{-t}}_{\text{i-1}} \text{),B} \text{}.}$

Step 2: If *l*_{*i*} ≤ *b'(t*_{*i*}*)*, then the *i*^{th} packet is conforming to the Bandwidth Profile and set *b (t*_{*i*}*) = b'(t*_{*i*}*)* - *l*_{*i*}', else the *i*^{th} packet is not conforming and set *b(t*_{*1*}*) = b'(t*_{*1*}*)*.

The bandwidth profile can be thought of as a token bucket. Every millisecond, tokens, each representing a byte are added to the bucket at a rate equal to the average bandwidth. Each time a packet is received, tokens equal to the length of the packet are removed from the bucket. An arriving packet is conforming if the bucket contains at least the length of the packet in tokens.

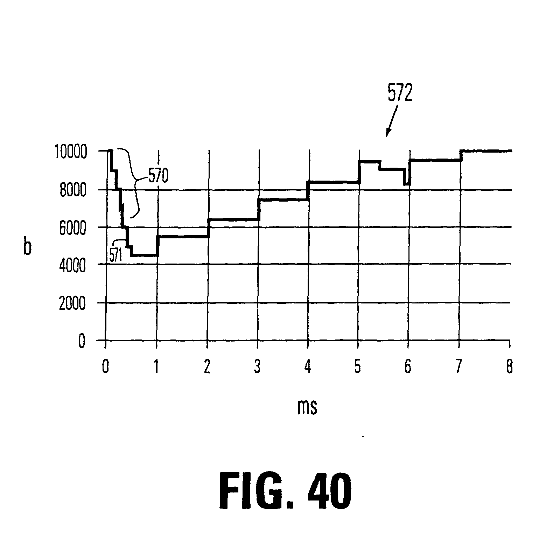

Fig. 40 illustrates the operation of the bandwidth algorithm. In this example, B = 10,000 bytes and A = 1000 bytes/msec (8 Mbps). In the first ms, 4, 1000 byte packets are received back-to-back in region 570 (assuming a 100 Mbps transmission rate) followed by a 500-byte packet in region 571. The next packets are not received until after 5 ms in region 572 of the graph. In this example, all packets conform to the bandwidth profile. If a received packet caused the trace in the graph to dip below the length of the packet, then the profile would be violated. So if b was driven below 1000, and a packet of length 1500 was received, a violation is detected.

A bandwidth profile is associated with each class of service in an instance of virtual connection service.

Packets that do not conform to the bandwidth profile are treated as fast data service packets. This means that secure MAN Expedited Service packets that are not conformant, count against the standard data service bandwidth profile. Thus it is possible that an expedited service packet could be found to be non-conformant with both the expedited service bandwidth profile and the standard data service bandwidth profile and thus no performance objectives apply to this packet.

Implementation of virtual connections that are part of secure MAN transmission service with respect to the switches in the secure MAN like that shown in Fig. 25 is described in the following sections.

There are three types of virtual connection in this example, including point-to-point virtual connection, point-to-multipoint virtual connection and multipoint-to-multipoint virtual connection.

Point-to-point virtual connections serve unicast IP packets from one routed point and addressed to the other routed point, which are delivered to the other routed point, as are broadcast and multicast packets. Non-IP packets are discarded by this example service. It is envisioned that IP technology and services will evolve with time without departing from the present invention.

When a point-to-point virtual connection is provisioned, endpoints of virtual connection (service interfaces that will be attached to this virtual connection and demarcation devices attached to those service interfaces) are identified. Point of Presence POP switches, also called access switches and switch ports connected to demarcation devices are also identified.

Selection and configuration of a VLAN in support of virtual connections in this example secure MAN is done using network zones. Network Zones are defined in order to optimize VLAN broadcast / multicast containment. Demarcation devices are grouped within Network Zones. Typically, the grouping will correspond to geographic location, but this is not a requirement.

To assign a VLAN ID to Virtual connection, the Network Zones in which endpoints of the virtual connection reside are identified. It is determined if both endpoints are in the same zone or not. Each Network Zone in a metro area has some number, say 50, VLANs assigned to it. Some of the assigned VLANs, say 25 VLANs, are designated as IntraZone VLANs and are used for point-to-point virtual connections that originate and terminate in the same zone. The others of the assigned VLANs are designated as InterZone VLANs and are used for point-to-point virtual connections that span multiple zones. VLANs must be assigned such that no two Virtual connections configured in any one demarcation device use the same VLAN id. Otherwise, cross talk between the two Virtual connections will occur.

Conceptually, VLAN assignments can be maintained in a table in order to satisfy the requirements for mutual exclusion and network optimization. Table 11 is illustrative of VLAN assignment maintenance:

**Table 11.**

| 1.1.1.1.1.1.1.1 VLAN id | Metro Area id | Virtual connection id | Demarcation id |
|---|---|---|---|
| 1.1.1.1.1.1.1.2 2 | 10 | LW0001 | D0001 |
| 1.1.1.1.1.1.1.3 2 | 10 | LW0001 | D0002 |
| 1.1.1.1.1.1.1.4 27 | 10 | LW0002 | D0001 |
| 1.1.1.1.1.1.1.5 27 | 10 | LW0002 | D0005 |
| 1.1.1.1.1.1.1.6 52 | 10 | LW0003 | D0001 |
| 1.1.1.1.1.1.1.7 52 | 10 | LW0003 | D0004 |

The following equations are used to calculate the VLAN ID that is to be configured on service interfaces being provisioned for a IntraZone point-to-point virtual connection.

Let D1 and D2 denote the demarcation devices corresponding to the first and second endpoints specified in a point-to-point provisioning request respectively.

The VLAN ID will be assigned from the range of IDs assigned to the Zone for IntraZone use. The starting value of the range is computed from the following formula, where Network Zone Number is a unique number assigned to the Network Zone in a metropolitan area.:${\text{Vid-Min}}_{\text{intraZonevirtual connection}} {\text{= ((Network Zone Number - 1) MODULO 20)}}^{\text{*}} \text{50 + 2}$

Service center IDs (also called network zone IDs) may be assigned sequentially in a metro area starting with 1. This makes the maintenance and calculations easy. If not assigned sequentially, a mapping table is created that maps a service center ID to a VLAN ID address space.

Once the VLAN ID range is identified, the lowest VLAN ID that is not in use on both D1 and D2 is used.

The highest permissible VLAN ID value for IntraZone Point-to-Point Virtual connection is Vid-Min + 25.

The following equation is used to calculate the VLAN ID that is to be configured on service interfaces being provisioned for a InterZone point-to-point virtual connection.

Let D1 and D2 denote the demarcation devices corresponding to the first and second endpoints specified in a point-to-point provisioning request respectively. A VLAN ID will be selected from the least used range of the two participating Zones. The starting value of the range associated with D1 and D2 are computed from the following formulas:${\text{Vid-Min-D1}}_{\text{InterZonevirtual connection}} {\text{= ((Network Zone Number(D1) - 1) MODULO 20)}}^{\text{*}} {\text{50 + 27 Vid-Min-D2}}_{\text{InterZonevirtual connection}} {\text{= ((Network Zone Number (D2) - 1) MODULO 20)}}^{\text{*}} \text{50 + 27}$

For each demarcation device, find the lowest VLAN ID in the computed range, that is not already in use within the device.

From the two possible VLAN ID values, choose the lowest ID with respect to the range of each. For example, if the computed Vid-Min-D1 value is 27, with 27-30 in use on D1, and Vid-Min-D2 is 127, with 127-128 in used, the VLAN ID 129 will be assigned, since its value with respect to 127 (2) is lower than ID 31 with respect to 27 (4).

Selected VLAN is configured on identified demarcation devices; identified service interfaces are configured in the new VLAN. Service interfaces are configured to receive only untagged frames and only the selected VLAN is allowed out of service interfaces (untagged). Network ports (towards secure MAN network) on demarcation devices are configured in the new VLAN allowing only tagged frames to pass through.

A selected VLAN is configured on identified POP switches (if not already configured). The access port on the POP switch connected to identified demarcation device is configured in the selected VLAN allowing only tagged frames in and out of the port. If POP switch supports the Generic VLAN Registration Protocol GVRP, the upstream port (s) will propagate this VLAN to local switches. Upstream switches will propagate this VLAN in other parts of the network. The upstream ports (from the POP switch) will also process the incoming GVRP requests.

If GVRP is not supported by a POP (and/or local/regional) switch, VLANs are configured manually on all switches and ports in the path between the endpoints of the virtual connection (including redundant paths). By "manual configuration," it is meant that the configuration files are not self-propagating, such as in a protocol like GVRP, but require some user intervention to set up and/or modify across the network.

Security filters are configured as part of the process of provisioning virtual connections. When the customer endpoint (demarcation device MAC address) is known on a service interface being provisioned, the MAC address is configured in a source address filter on the access port on the POP switch. This filter forces packets out of the port coupled to a customer access point (if on the same POP switch) or network port (if not on the same POP switch). This source address filter is also configured on the network port of the other POP switch (connected to other endpoint of virtual connection, if required) forcing packets out of the correct access port.

If the customer endpoint is unknown at the current time, the above filter configuration is done after a successful authentication has been performed after learning the endpoint MAC address.

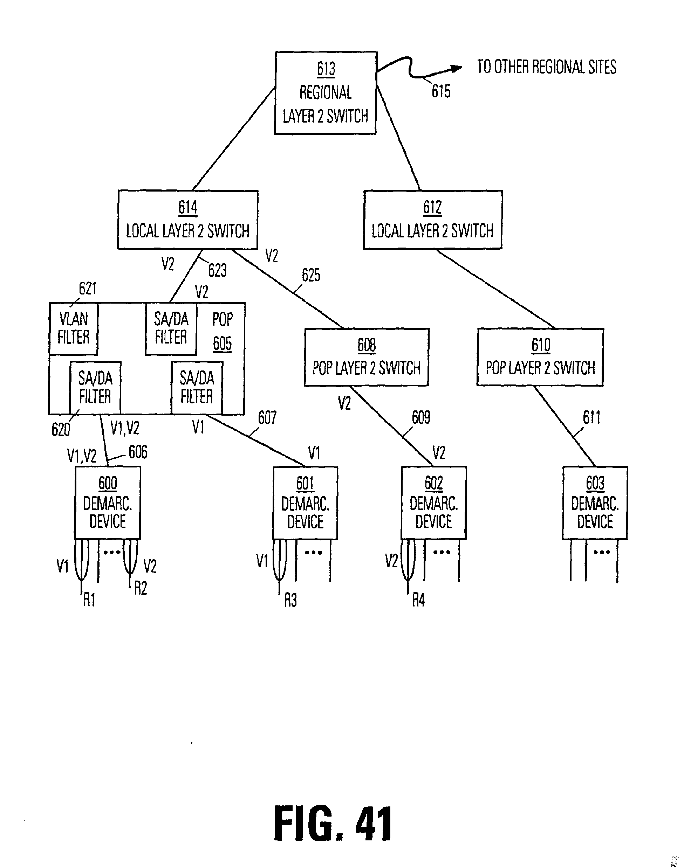

Examples of secure MAN configurations for point-to-point virtual connections are given in Figs. 41-42.

Fig. 41 illustrates a secure MAN arranged in one example configuration. The secure MAN includes a plurality of demarcation devices, in this example demarcation devices 600, 601, 602 and 603 are illustrated. The demarcation devices are connected to point of presence POP switches in the secure MAN. Thus, the demarcation devices 600, 601 are coupled to the POP switch 605 across lines 606 and 607 respectively. Demarcation device 602 is coupled to POP switch 608 across line 609. Demarcation device 603 is coupled to POP switch 610 across line 611. The POP switches 604, 608, 610 are connected to local layer 2 switches 614 and 612. Though local layer 2 switches 614, 612 coupled to a regional layer 2 switch 613. The regional layer 2 switch 613 may be coupled to other regional sites by a long haul network or otherwise as indicated by the arrow 615.

The hierarchy illustrated in Fig. 41 is merely one example. A wide variety of architectures for the switches could be utilized according to embodiments of the present invention. For example, a regional switch may also act as a POP switch, and local switches may not be used. For simplicity, redundancy is omitted from the example, although such redundancy would be implemented in many embodiments of the invention.

Two virtual connections V1, V2 are illustrated in Fig. 41. Virtual connection V1 is a point-to-point channel between the service interface R1 on demarcation device 600 and R3 on demarcation device 601. The virtual connection V2 is a point-to-point channel between the service interface R2 on demarcation device 600, and the service interface R4 on demarcation device 602.

Each of the layer 2 switches in the network illustrated can be implemented using a basic layer 2 architecture such as that illustrated in connection with the POP switch 605. Each port of the switch includes a source address and destination address filter 620. Also, associated with the switch 605 is a VLAN filter 621. The demarcation devices 600-603 include client side ports, such as the ports R1 through R4, and one or more service access port and such as the port coupled to line 606. In one embodiment, the client side ports and receive layer 2 packets carrying source and destination addresses followed by Type field and an Internet Protocol payload as well-known the art. At the demarcation device 600, a VLAN tag is added to the frame, to associate the tag with a virtual connection.

In operation, the demarcation device 600 sends a frame from port R1 out on line 606 and carrying the VLAN tag V1. The source/destination address filters (e.g. 620) in the switch 605 are configured to recognize the source and destination addresses of the frame. The frame will be accepted in the switch at the port only if it has a recognized source address on that port. The VLAN filter 621 on the switch 605 will identify the outgoing ports on the switch 605 which are configured to receive the packet carrying that VLAN tag and that source address. Thus, a port coupled to line 620 passes the packet received from the port R1 on line 620 to the local layer 2 switch 614. Likewise, the port coupled to line 607 passes the packet carrying the VLAN tag V1 towards the port R3. The VLAN filter 621 recognizes the packet as a member of the virtual connection V1, and allows it to be sent outgoing on the port coupled to line 620 and on the port coupled line 607.

For the virtual connection V2, the source and destination address filter 620 accepts the packet at switch 605. The VLAN filter 621 limits the outgoing path for the packet to the port connected to line 620. The packet is forwarded up the tree towards the local layer 2 switch 614. Layer 2 switch 614 allows the packet to be transmitted only on line 625 to the POP layer 2 switch 608.

As can be seen in Fig. 41, virtual connections remain confined to their logic Network Zone delimited by the local switches 611, 612, i.e., V1 and V2 never cross the Network Zone 1 boundary above local switch 1. The upstream port on local switch 1 is not a member of V1 or V2. Therefore packets in V1 and V2 are not forwarded by local switch 1 on its upstream port to the regional switch. At the same time, source address filters ensure delivery of packets to only the correct recipient.

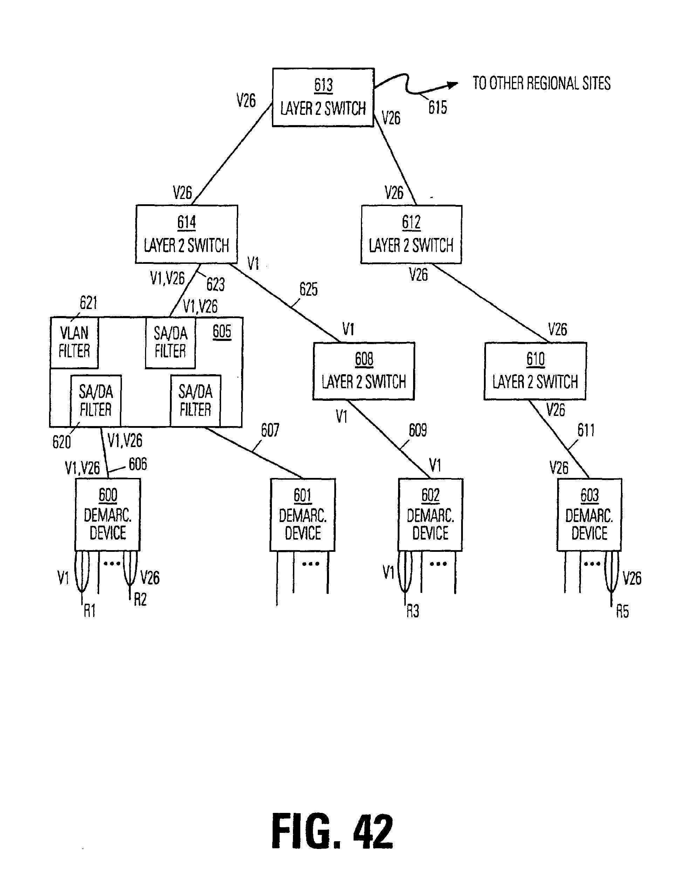

In Fig. 42, the network switch and access point configuration and VLAN ID assignment remains the same. However, a point-to-point virtual connection is provisioned between R1 and R3 in the Network Zone served by local switch 614 while another virtual connection is provisioned between R2 and R5 served by local switch 614 and local switch 612 respectively, and thus across Network Zones. For simplicity, redundancy is omitted. VLAN ID V26 is selected for non-local virtual connection from R2 to R5.

Only VLAN 26 crosses the Network Zone boundary. Local VLANs in Network Zone 1 remain local. Local switch 1 propagates V26 to its upstream regional switch thus creating a forwarding path across the regional switch 613 to local switch 612 and demarcation device 603.

For the embodiment of Fig. 42, packets from the port connected to R1 in the virtual connection V1 are accepted in the source and destination address filter 620 of POP switch 605 and allowed to pass on the port connected to line 623 up to the layer 2 switch 614. The packets are blocked by the VLAN filter 621 on the other ports of the POP switch 605. At the switch 614, the packet from a virtual connection V1 is allowed out on the port coupled to line 625, and not on other ports. At switch 608, the packet in the virtual connection V1 is allowed out on the line 609 to the demarcation device 602, and onto the destination R3. Similar filtering occurs in the reverse direction from the end station R3 to the end station R1. Packets within the virtual connection V26 are allowed into the switch 605, and propagated to the switch 614. At switch 614, packets for virtual connection V26 are passed up to the switch 613, where they are propagated through of switch 612, switch 610 and onto the demarcation device 603 where they are delivered to the destination R5. The logical construct of network zones being defined by a layer of switches in a network, such as the switches 614 and 612 in his example, can be used for the management of the VLAN IDs, and other network addressing functions. In some embodiments of the network, no such network zone logical construct is necessary.

A point-to-multipoint virtual connection is used to connect one routed point to many routed points and is especially useful to deliver services to multiple customers simultaneously while maintaining isolation among customers themselves. A point-to-multipoint virtual connection is implemented as described below.

In a point-to-multipoint virtual connection, a unicast IP packet injected by the root node and destined to one of the leaf nodes is delivered to the leaf node while a multicast/broadcast packet is delivered to all leaf nodes. Unicast multicast and broadcast packets injected by a leaf node and destined to the root node are delivered to the root node. No packets from one leaf node are delivered to another leaf node though.

When a point-to-multipoint virtual connection is provisioned, the endpoints (service interfaces that will be attached to this virtual connection and demarcation devices attached to those service interfaces) are identified. POP switches (and access ports) connected to those demarcation devices are also identified.

A separate VLAN is used for each point-to-multipoint virtual connection. The lowest VLAN ID available in the range assigned to point-to-multipoint virtual connection is used to provision this virtual connection.

The selected VLAN is configured on the demarcation devices necessary to support the virtual connection; identified service interfaces are configured in the new VLAN. Service interfaces on the customer side are configured to receive only untagged frames and only the selected VLAN is allowed out of service interfaces (untagged). Network ports (towards the secure MAN network) on demarcation devices are configured in the new VLAN allowing only tagged frames to pass through.

The selected VLAN is configured on the POP switch (if not already configured). The access port on POP switch connected to the demarcation device is also configured in the selected VLAN allowing only tagged frames in and out of the port. If the POP switch supports GVRP, the upstream port(s) will propagate this VLAN to other parts of the network. The upstream ports will also process the incoming GVRP requests.

If GVRP is not supported by a POP switch (and/or local/regional switches), VLANs are configured manually on all switches and ports in the path between the root node and each leaf node on the virtual connection (including the redundant paths).

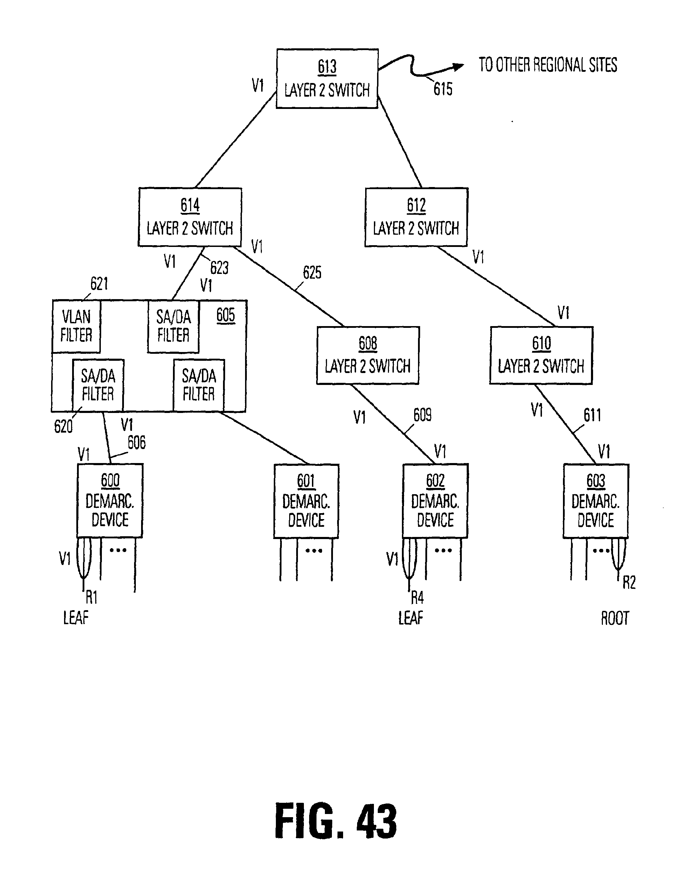

The configuration of security filters for a point-to-multipoint virtual connection is described with reference to the example in Fig. 43, which shows the same network switch configuration as Figs. 41 and 42.

Generally, if the root node endpoint R2 (router MAC address) is known on a service interface being provisioned at demarcation device 603, the MAC address is configured in a source address filter on the access port on POP switch 610 (leading to the root node) allowing packets to be forwarded. For each known leaf node (whose MAC address is known) that resides on the same POP switch 610 as the root node, a source address filter (with leaf node's address) is configured on the leaf node port on the POP switch forcing packets to egress from the port leading to the root node.

For each known leaf node R4, R1 (whose MAC address is known) that resides on a different POP switch than the root node, a VLAN filter and/or a source address filter (with leaf node's address) is on the network port of the root POP switch 603, is/are configured allowing packets to egress from the port leading to the root node 615. On every POP switch 608, 600 that leads to one of the leaf nodes, a source address filter (with leaf node's address) on the access port is/are configured, allowing packets out of the network port. A source address filter (with root node's address) on the network port of the same POP switch and/or a VLAN filter also allows the packets to egress from the correct leaf node port.

If a customer endpoint (root node/leaf node) is unknown at the current time, the above filter configuration is done after a successful authentication when address of the endpoint is learned.

Fig. 43 shows a point-to-multipoint virtual connection from R2 to R1 and R4. As can be seen, the VLAN V1 crosses those branches that lead to member ports (root/leaf nodes). Security source address filters on POP switches ensure that the root node can reach all the leaf nodes (R1, R4) while leaf nodes (R1, R4) can only reach the root node (R2).

A multipoint-to-multipoint virtual connection is used to connect multiple routed points together and is especially useful to extend a campus LAN (minus bridging over the secure MAN network). The definition and implementation is described below for one embodiment.

In a multipoint-to-multipoint virtual connection, a unicast IP packet injected by a member and destined to one of the other members is delivered to the other member while a multicast/broadcast packet is delivered to all the members.

When a multipoint-to-multipoint virtual connection is provisioned, the endpoints (service interfaces) that will be attached to this virtual connection and demarcation devices attached to those service interfaces are identified. POP switches (and access ports) connected to demarcation devices are also identified.

A separate VLAN is used for each multipoint-to-multipoint virtual connection. The highest VLAN ID available in the range assigned to multipoint-to-multipoint virtual connection is used to provision this virtual connection. Selecting the highest available VLAN ID for a multipoint-to-multipoint virtual connection makes point-to-multipoint and multipoint-to-multipoint virtual connections consume VLAN IDs from opposite sides. Based on the customer demand, one type of virtual connections may consume more VLAN IDs than the other. If all the available VLAN IDs are consumed, they wrap around and start sharing already used VLAN IDs. It stretches the broadcast domain, but does not affect the service availability or security of secure MAN service.

The selected VLAN is configured on demarcation devices; identified service interfaces are configured in the new VLAN. Service interfaces are configured to receive only untagged frames and only the selected VLAN is allowed out of service interfaces (untagged). Network ports (towards the secure MAN network) on demarcation devices are configured in the new VLAN allowing only tagged frames to pass through.

The selected VLAN is configured on the POP switch (if not already configured). The access port on POP switch connected to the demarcation device is also configured in the selected VLAN allowing only tagged frames in and out of the port. If POP switch supports GVRP, the upstream port(s) will propagate this VLAN to other parts of the network. The upstream ports will also process the incoming GVRP requests.

If GVRP is not supported by a POP switch (and/or local/regional switches), VLANs are configured manually on all switches and ports in the path between all pairs of members on the virtual connection (including redundant paths).

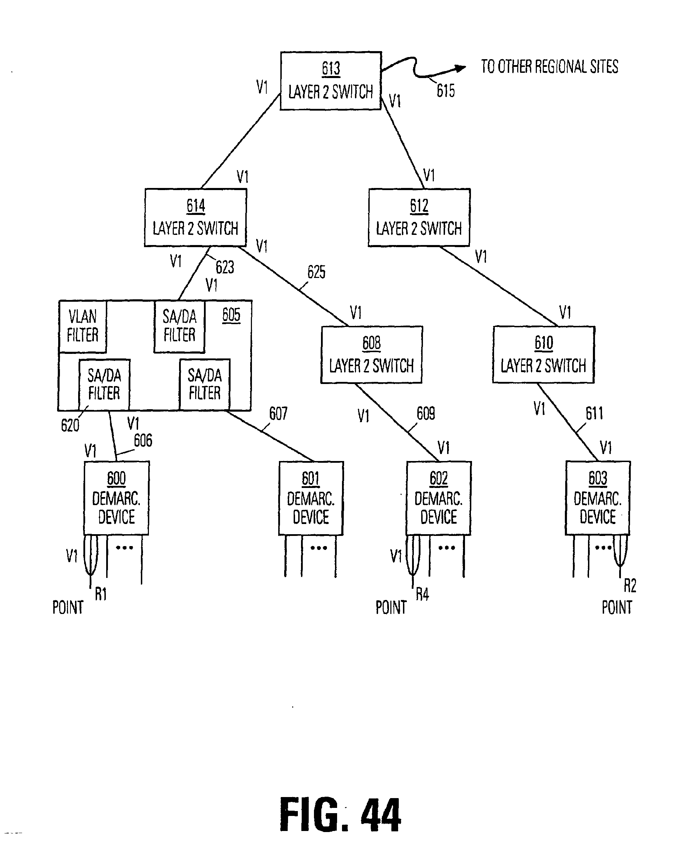

Configuration of source address security filters can be understood with reference to the example in Fig. 44. Generally, if the endpoint R1 (e.g., router MAC address) is known on a service interface being provisioned, the MAC address is configured in a source address filter 620 on the access port on the POP switch 605. A source filter is also configured on the network port of those POP switches 608, 610 that lead to other member nodes on this virtual connection. This filter along with MAC address lookup on the egress POP switch will correctly deliver the unicast packets to the correct member node and multicast/broadcast packets to all member nodes on that switch.

If the customer endpoint is unknown at the current time, the above filter configuration is done after a successful authentication when address of the endpoint is learned.

Fig. 44 shows a multipoint-to-multipoint virtual connection among R1, R2, and R4. As can be seen, the assigned VLAN V1 is configured in the VLAN filters 621, to reach all member nodes while source address security filters on POP switches 605, 608, 610 allow any member to talk to any other member.

### CONCLUSION

Embodiments of the present invention provide a system facilitating commerce between persons that subscribe to a common third party service provider for interaction. The transactions required to fulfill an agreement to share the third party service are simplified, automated and can be completed quickly and easily. Further, the security of the transactions, and of the service provisioned in response to the transactions, is assured.

Embodiments of the present invention also facilitate such commerce in support of a facilities-based telecommunications IP carrier meeting the need for broadband services across the metropolitan area, where the LAN, long haul and access networks all meet. Subscribers to the carrier are able to provision services easily and quickly. Today there is a gigabit gap between the network edge and core. As demand for bandwidth becomes the constraining factor in realizing the new network based economy, the system will provide this final linking infrastructure to enable broadband consumer-to-consumer, consumer-to-business and business-to-business connectivity.

Very high speed, low cost, fiber based IP data network services are provided within a metropolitan area and provisioned according to embodiments of the present invention, along with service between metropolitan areas through partnerships with long haul fiber carriers. Many businesses and companies providing outsourced services to businesses (e.g. data backup storage, enterprise resource planning and financial application providers) will be attached to the metropolitan area network allowing the system to offer a 'gateway' or 'marketplace' function, offering business customers a wide selection and choice between providers of these services.

In addition to providing access to service providers, the system provides high data bandwidth interconnection between private networked locations to those who choose not to operate their own facilities. It provides security, performance reporting, and bandwidth management to all its customers. Furthermore, provisioning of connections in the secure MAN is simplified, automatic, and accomplished with very low transaction costs.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

While the present invention is disclosed by reference to the preferred embodiments and examples detailed above, it is to be understood that these examples are intended in an illustrative rather than in a limiting sense. It is contemplated that modifications and combinations will readily occur to those skilled in the art, which modifications and combinations will be within the scope of the invention.

## Claims

1. A method for provisioning services offered by a service provider for a plurality of parties, comprising:
providing an interface by which a first party identifies attributes of a particular service to be shared with a second party and to be provisioned by the service provider;
offering participation in the particular service to the second party via an interface by which the second party may signal acceptance of the particular service; and
if acceptance by the second party of the particular service is signaled, then executing a process to provision the particular service for the first party and the second party.

2. The method of claim 1, including:
establishing a connection between the service provider and the first party for delivery of services according to parameters of a service provider account with the first party; and
establishing a connection between the service provider and the second party for delivery of services according to parameters of a service provider account with the second party.

3. The method of claim 2, including verifying that the service provider accounts of the first party and of the second party support the particular service.

4. A method for provisioning services offered by a service provider for a plurality of parties, comprising:
establishing connections between the service provider and a plurality of parties for delivery of services according to parameters of respective service provider accounts;
providing an interface by which a first party in the plurality of parties identifies attributes of a particular service to be shared with one or more other parties in the plurality of parties, and to be provisioned by the service provider;
verifying that the service provider accounts of the first party and of said one or more other parties support the particular service;
offering participation in the particular service to said one or more other parties having service provider accounts which support the particular service via an interface by which said one or more other parties may individually signal acceptance the particular service; and
if acceptance of the particular service is signaled, then executing a process to provision the particular service for the first party and said one or more other parties which signaled acceptance.

5. The method of claim 1 or claim 4, wherein the services comprise a communication services, and the attributes of the particular service include parameters of a communication channel using communication resources of the service provider.

6. The method of claim 1 or claim 4, wherein said providing an interface includes displaying an image prompting a user to create a logical instance of the particular service on behalf of the first party.

7. The method of claim 6, wherein said offering includes displaying an image prompting a user to create a logical connection to the logical instance of the particular service to signal acceptance on behalf of the second party.

8. The method of claim 6, including upon creation of the logical instance of the particular service, displaying an image prompting a user to offer the particular service to another party, on behalf of the first party.

9. The method of claim 6, including upon creation of the logical instance of the particular service, displaying an image prompting a user to offer participation in the particular service to another party, on behalf of the first party.

10. The method of claim 6, wherein said interface includes constructs by which said one or more other parties may indicate a location for connection to the particular service.

11. The method of claim 1 or claim 4, including sending the attributes of the particular service to the service provider for use in provisioning the particular service for the first and second parties.

12. The method of claim 1, wherein the particular service is arranged for at least one additional party in addition to the first and second parties, including:
offering participation in the particular service to the at least one additional party via an interface by which the at least one additional party may signal acceptance the particular service; and
if acceptance by the at least one additional party of the particular service is signaled, then executing a process to provision the particular service for the at least one additional party.

13. A method for provisioning communication services in a communication network offered by a service provider for a plurality of parties, comprising:
establishing connections of a plurality of parties to the communication network for communication services, said connections comprising respective service interfaces and parameters of respective service provider accounts;
providing an user interface by which a first party in the plurality of parties identifies attributes of a particular communication channel in the communication network to be shared with one or more other parties in the plurality of parties, and to be provisioned by the service provider in the communication network;
verifying that the service provider accounts of the first party and of said one or more other parties support the particular communication channel;
offering participation in the particular communication channel to said one or more other parties having service provider accounts which support the particular communication channel via an interface by which said one or more other parties may individually signal acceptance the particular communication channel; and
if acceptance of the particular communication channel is signaled, then executing a process to provision the particular communication channel for the first party and said one or more other parties which signaled acceptance.

14. The method of claim 13, wherein said respective service interfaces have unique network addresses, and said process to provision the particular interface includes establishing a tag to identify packets for use of the particular communication channel, configuring the service interfaces to use tag packets for use of the particular communication channel, and configuring switches in the network to route packets to and from the service interfaces in response to the unique network addresses and the tag in the packets.

15. The method of claim 13, wherein the attributes of the particular communication channel include identifiers of service interfaces for the parties, and data indicating that the channel is to be one of a set including point-to-point, point-to-multipoint, or multipoint-to-multipoint.

16. The method of claim 15, wherein the identifiers of service interfaces include MAC addresses.

17. The method of claim 14, wherein the unique network addresses comprise MAC addresses, and the tag comprises a VLAN tag.

18. The method of claim 13, wherein the communication network comprises a metropolitan area network, including switches and optical fiber links configured in a tree.

19. The method of claim 18, wherein said respective service interfaces have MAC addresses, and said process to provision the particular interface includes establishing a VLAN tag to identify packets for use of the particular communication channel, configuring the service interfaces to tag packets for use of the particular communication channel, and configuring switches in the network to route packets to and from the service interfaces in response to the MAC addresses and the VLAN tag in the packets.

20. The method of claim 13, wherein said providing an interface includes displaying an image prompting a user to create a logical instance of the particular service on behalf of the first party.

21. The method of claim 15, wherein said offering includes displaying an image prompting a user to create a logical connection to the logical instance of the particular communication channel to signal acceptance on behalf of the second party.

22. The method of claim 21, including upon creation of the logical instance of the particular communication channel, displaying an image prompting a user to offer participation in the particular communication channel to another party, on behalf of the first party.

23. The method of claim 13, including sending the attributes of the particular communication channel to the service provider for use in provisioning the particular communication channel for the first and second parties.

24. The method of claim 1, claim 4 or claim 13 wherein said providing an interface includes establishing a server, available to the first party via a public network, to manage the interface.

25. The method of claim 24 wherein the server comprises an internet server available to the first party using an internet browser.

26. The method of claim 1, claim 4 of claim 13, wherein said interface comprise an electronic document.

27. The method of claim 26, wherein the electronic document includes objects compliant with a hypertext markup language HTML standard.

28. The method of claim 27, wherein the HTML standard is XML.

29. The method of claim 1 or claim 4, wherein the services comprise electric power delivery.

30. The method of claim 1 or claim 4, wherein the services comprise fuel delivery.

31. The method of claim 1, including providing said interface using a secure internet protocol.

32. The method of claim 1 or claim 4, wherein the services comprise water delivery.

33. The method of claim 1 or claim 4, wherein the services comprise secure communication bandwidth delivery.

34. The method of claim 1, including providing information via said interface by which said second party may signal acceptance, the information being associated with said offering from the first party for use by said second party independent of the service provider.

35. The method of claim 4 or claim 13, including providing information via said interface by which said one or more other parties may signal acceptance, the information being associated with said offering from the first party for use by said one or more other parties independent of the service provider.

36. A method for provisioning services offered by a service provider for a plurality of parties, comprising:
establishing connections and service provider accounts between the service provider and a plurality of parties for delivery of services among the parties according to parameters of respective service provider accounts;
providing an interface accessible by parties in the plurality of parties, the interface supporting logical definition of a services to be provisioned by the service provider and associated with parties in the plurality of parties, supporting logical connection to particular logically defined services by said associated parties, and supporting offers of particular logically defined services by a first party to one or more other of said associated parties, and;
processing the logical definitions of particular services to verify that the service provider accounts of said associated parties support the particular logically defined service; and
after logical connections of one or more parties to said particular logically defined service, executing a process to provision an instance of the particular logically defined service for said associated parties.

37. The method of claim 36, wherein the services offer comprise bandwidth in a communication network, and the connections comprise service interfaces coupled to the communication network.

38. The method of claim 37, wherein said communication network comprises a plurality of network intermediate devices which include filters for use in routing data flow among service interfaces, and said process to provision includes configuring said filters according to the particular logically defined service.

39. The method of claim 38, wherein said service interfaces have MAC addresses, and said filters are responsive to said MAC addresses.

40. The method of claim 39, wherein said process to provision includes assigning Virtual LAN tags to particularly logically defined services, and configuring said service interfaces to append the assigned virtual LAN tags to data packets transmitted via the service interface to the communication network.

41. The method of claim 36, wherein particular logically defined service be one of a set including a point-to-point channel, a point-to-multipoint channel, or multipoint-to-multipoint channel.

42. A method of provisioning services offered by a service provider for a plurality of parties comprising:
providing a representation accessible by the plurality of parties via a communication network, of potential and actual uses of the services to allow a party in the plurality of parties to conduct transactions using or involving the service with other parties in the plurality of parties.

43. The method of claim 42, wherein said representation comprises an up to date representation of the service including a record of pending actions updated as they are created.

44. The method of claim 42, wherein the representation comprises elements, when displayed to one of the parties in the plurality of parties, convey sufficient information so as to explain a proposed transaction.

45. The method of claim 42, wherein the representation includes images and forms expressed in a markup language compatible with a standard HTML or XML.

46. The method of claim 42, including providing security for the representation and the communication network to the plurality of parties known by the plurality of parties to be sufficient to trust data and origin/authorship of a proposed transaction.

47. The method of claim 46, wherein providing security includes conducting the transactions using certificates and secure network technology.

48. A method of provisioning services offered by a service provider, comprising:
providing an interactive model of a relationship involving participation in the service offered by the service provider, and containing a plurality of elements represented by one or more of images and forms corresponding to parameters of the participation in the service; and
allowing selective changes in parameters of the participation in the service by one or more of manipulating images and recording an object in a form, said selective changes including representing a participant's agreement to one or more of engage or participate in the relationship, and change the parameters of participation in the service for the relationship.

49. The method of claim 48, including electronically conveying changes from one party to another party to convey requests for changes in parameters of the participation in the service.

50. A system that graphically represents a connection or service relationship as a wire with two ends or plugs that can be connected into or moved between sockets or interfaces independently by two participants in a proposed transaction to facilitate their independent control over the delivery and acceptance of a service.
